# EUROPÄISCHE PATENTSCHRIFT

(11) **EP 0 798 349 B1**
(45) Veröffentlichungstag und Bekanntmachung des Hinweises auf die Patenterteilung: **31.07.2002**
(21) Anmeldenummer: 97104805.3
(22) Anmeldetag: 20.03.1997
(51) Int. Cl.: C09D 5/00, C09D 191/06, C09D 201/00, C09D 7/12, C09D 123/06, C09D 175/06, C08K 3/36, C09D 133/06, C09D 175/04

(54) **Mittel zum Aufbringen eines Schutzüberzugs auf harte Oberflächen, um sie gegen Witterungseinflüsse und mechanische Beanspruchungen sowie gegen Einwirkung von Chemikalien zu schützen, Verfahren zu ihrer Herstellung und ihre Verwendung**
Agents for the application of a protective coating on hard surfaces to protect them from weathering, mechanical strains and the action of chemical, method for their manufacture and use thereof
Agents pour appliquer un révêtement protecteur sur les surfaces dures, afin de les protéger des intempéries et des contraintes mécaniques ainsi que de l'action des produits chimiques, leur procédé de préparation et leur utilisation

(30) Priorität: 25.03.1996 DE 19611690
(43) Veröffentlichungstag der Anmeldung: 01.10.1997
(73) Patentinhaber: Neumann, Bernd, 10585 Berlin (DE)
(72) Erfinder: Neumann, Bernd, 10585 Berlin (DE)
(74) Vertreter: Hartmann, Günter, Dr. Dipl.-Chem.

(56) Entgegenhaltungen:
- EP-A- 0 288 964
- EP-A- 0 437 972
- EP-A- 0 577 952
- DE-A- 4 336 214
- FR-A- 2 634 774
- FR-A- 2 753 965

## Beschreibung

Die Erfindung betrifft ein Beschichtungsmittel zum Aufbringen eines Schutzüberzugs bzw. einer Imprägnierung auf harte Oberflächen, um diese gegen Witterungseinflüsse und mechanische Beanspruchungen sowie gegen Einwirkung von Chemikalien zu schützen, Verfahren zu ihrer Herstellung und ihre Verwendung; sie betrifft insbesondere ein Beschichtungsmittel und dessen Verwendung zum Aufbringen eines dünnen, haltbaren Schutzüberzugs bzw. einer haltbaren Imprägnierung auf harte Oberflächen, insbesondere gegebenenfalls lackierte Stein-, Keramik-, Glas-, Metall-, Holz- und KunststoffOberflächen, um diese gegen Witterungseinflüsse und mechanische Beanspruchung sowie gegen Einwirkung von aufgebrachten Chemikalien, insbesondere gegen die zum Beschmieren und Bemalen solcher Oberflächen beispielsweise mit Parolen, Graffiti, Takes und dgl. verwendeten Chemikalien und die zur Entfernung solcher Beschmierungen und Bemalungen eingesetzten Chemikalien zu schützen, und insbesondere um die Entfernung gegebenenfalls aufgebrachter unerwünschter Beschmierungen und Bemalungen von den so hergestellten Schutzüberzügen bzw. Imprägnierungen zu erleichtern.

Flächen aus Baustoffen, wie Backsteinen, Ziegeln, natürlichen und synthetischen Steinen, Keramik, Gips, Beton, Zement, Mörtel, Holz, Glas und Kunststoffen, sowie metallische Oberflächen, beispielsweise die lackierten Karosserien von Kraftfahrzeugen, und mineralische Oberflächen, beispielsweise Hauswände, Denkmalanlagen, Straßen- und Bodenbeläge, Skulpturen und Brunnenanlagen, unterliegen nicht nur der Einwirkung der Witterungseinflüsse und mechanischen Beanspruchungen, wie sie bei bestimmungsgemäßer Nutzung auftreten, sondern sind durch die in den letzten Jahren immer stärker um sich greifende Unsitte des Beschmierens und Bemalens solcher Flächen beispielsweise mit Parolen, Graffiti, Takes und dgl. zusätzlichen Belastungen durch Chemikalien ausgesetzt und zwar sowohl durch das Aufbringen der unerwünschten Beschmierungen und Bemalungen als auch durch die anschließende Reinigung, die auf mechanischem oder chemischem Wege erfolgen kann.

Gerade in Großstädten bieten sich viele Gelegenheiten, auf den Außenflächen von U- und S-Bahnzügen, Telefonzellen, Briefkästen, Kachelfliesen, Fensterscheiben und Häuserwänden, aber auch auf Flächen von Innenausstattungen, wie Holzpaneelen und Kunststoffplatten, mehr oder minder künstlerische Darstellungen (sogenannte Graffiti), aber auch sonstige Beschmierungen und Bemalungen wie Parolen, meist unter Verwendung von Sprühfarben und Sprühlacken, anzubringen. Insbesondere wertvolle Reliefs und Skulpturen aus Granit und Marmor sind beliebte Ziele. Wegen der heute allgemein guten Qualität der Farben und Lacke und der Möglichkeit wiederholter Auftragungen ist die Entfernung solcher Beschmierungen und Bemalungen oft mit erheblichen Problemen verbunden, darüber hinaus ist sie meist zeitaufwendig und teuer und führt gelegentlich auch zu Beschädigungen des darunterliegenden Substrats.

Unerwünschte Verschmutzungen und Schmierereien, insbesondere Parolen, Graffiti und Takes, werden heute in der Regel mit im Handel erhältlichen chemischen Mitteln, wie Trichlorethylen (Tri), Terpentin, Abbeizmitteln, Nitroverdünnem, Salmiak-Abbeizmitteln und anderen Farb- und Lackentfernern, sowie insbesondere mit dem Antigraffiti-Mittel Dekontaminol® entfernt. Dabei sind Farb- und Lackschmierereien, insbesondere Parolen, Graffiti und Takes, besonders schwierig zu entfernen von porösen und saugfähigen Oberflächen, weil sie dann in tiefere Schichten des Oberflächensubstrats eindringen.

Leider greifen die zur Entfernung dieser unerwünschten Verschmutzungen und Schmierereien im Handel erhältlichen Mittel in der Regel auch die Oberflächenschicht der zu erhaltenden Flächen an, erzeugen blinde und matte Untergründe und können unter Umständen sogar die gesamte Oberfläche einer Außenlackierung zerstören.

Verschmutzungen auf porösen und saugfähigen Steinmaterialien wie Marmor, Granit und Sandstein, müssen gelegentlich auch mechanisch entfernt werden, z.B. durch Naß-Sandstrahlen. Auch dies führt zu Beschädigungen des Untergrunds. Außerdem entstehen dabei Partikelnebel, die wegen ihrer Lungengängigkeit die damit befaßten Personen akut gefährden können.

Betroffen davon sind naturgemäß insbesondere solche Objekte, die öffentlich zugänglich sind und auch überwiegend von öffentlichen Einrichtungen betrieben und unterhalten werden, wie Eisenbahnzüge, Bahnhofsanlagen, Fußgängertunnels, Brückenanlagen, Telefonzellen, Briefkästen, öffentliche und private Gebäude, Kraftfahrzeuge und dgl.

Oft ist der ursprüngliche Zustand nur durch den kompletten Neuanstrich der Objekte wieder herzustellen, wobei diese Flächen dann als ideale "Leinwand" häufig innerhalb kurzer Zeit erneut mit Schmierereien und Verschmutzungen versehen werden. Der volkswirtschaftliche Schaden, der durch verkürzte Wartungsintervalle an Gebäuden und Fahrzeugen und dadurch bedingte Ausfälle von Fahrzeugen und die ständigen Renovierungsarbeiten an Gebäuden und Anlagen entsteht, ist beträchtlich und wird von den Verursachem in den seltensten Fällen ersetzt, da sie zum einen selten ermittelt werden können, zum ändern, wenn dies doch einmal gelingt, nicht über die dafür erforderlichen Mittel verfügen.

Aus WO-A-93/22 372 ist ein System zum Schützen von Oberflächen und zum Erleichtern der Entfernung von unerwünschten Substanzen von den Oberflächen bereits bekannt, das besteht aus einer Epoxyharz-Zusammensetzung auf Wasserbasis, die ein Bisphenol A-Harz und ein Polyamidharz oder ein aliphatisches Urethan enthält, und einer Reiniger-Zusammensetzung, die N-Methylpyrrolidon in einer Konzentration von ≥ 50 Gew.-% sowie ein Tensid enthält. Die darin beschriebenen Oberflächenbehandtungsmittel ergeben zum einen harte, porzellanartige Überzüge, die den Charakter der damit behandelten Oberfläche verändern, zum ändern weisen sie eine unzureichende Beständigkeit gegen Verwitterung und Einwirkung von Chemikalien auf.

Aufgabe der Erfindung war es daher, Oberflächen, die Witterungseinflüssen und mechanischen Beanspruchungen sowie insbesondere den obengenannten Beanspruchungen durch Einwirkung von Chemikalien ausgesetzt sind, mit einem Schutzüberzug bzw. einer Schutzimprägnierung zu versehen, der (die) sie dauerhaft gegen solche Beanspruchungen und die damit verbundenen Schäden schützt.

Aufgabe der Erfindung war es insbesondere, besonders empfindliche glatte, rauhe und saugfähige Oberflächen mit einem Schutzüberzug bzw. einer Schutzimprägnierung zu versehen, der (die) sie nicht nur dauerhaft gegen Witterungseinflüsse und mechanische Beanspruchung sowie Einwirkung von Chemikalien schützt, sondern auch die Entfernung von darauf angebrachten unerwünschten Verschmutzungen und Schmierereien sowie wilden Plakatierungen erleichtert und vereinfacht.

Es wurde nun gefunden, daß diese Aufgabe erfindungsgemäß gelöst werden kann durch Aufbringen eines Beschichtungsmittels mit der nachstehend angegebenen Zusammensetzung in Form einer dünnen, zusammenhängenden Schicht bzw. Imprägnierung auf die zu schützende Fläche unter Ausbildung eines kontinuierlichen, gegen Witterungseinflüsse, mechanische Beanspruchung und chemische Beanspruchung beständigen Überzugs bzw. Imprägnierung, der (die) schon nach verhältnismäßig kurzer Trocknungszeit bei Umgebungstemperatur belastbar ist, d.h. der (die) dann insbesondere beständig ist sowohl gegen die Mittel, mit denen Verschmutzungen und Farbschmierereien aufgebracht werden, als auch gegen die Mittel, mit denen diese üblicherweise entfernt werden. Darüber hinaus erleichtert der erfindungsgemäß aufgebrachte Überzug bzw. Imprägnierung die schnelle, wirtschaftliche und problemlose Entfernung von darauf aufgebrachten Verschmutzungen und Schmierereien sowie wilden Plakatierungen, ohne daß der Schutzüberzug bzw. die Imprägnierung erneuert werden muß.

Die erfindungsgemäß vorgeschlagene Lösung der oben genannten Aufgabe besteht in einem Beschichtungsmittel mit der im Patentanspruch 1 angegebenen spezifischen Zusammensetzung, das im wesentlichen aus drei Komponenten besteht, nämlich einer Wirkstoff Komponente (a) mit einer spezifischen Zusammensetzung, einer flüssigen Träger-Komponente (b) mit einer spezifischen Zusammensetzung und einem oder mehreren Zusätzen (c) wobei alle diese drei Komponenten in einem spezifischen Gewichtsverhältnis zueinander vorliegen, sowie in einem Verfahren zur Herstellung dieses Beschichtungsmittels, wie es in Patentanspruch 14 definiert ist, sowie in der einschlägigen Verwendung des Beschichtungsmittels nach den Patentansprüchen 16 bis 19.

Bevorzugte Ausführungsformen des erfindungsgemäßen Beschichtungsmittels sind in den Patentansprüchen 2 bis 13 beschrieben und eine bevorzugte Ausführungsform des erfindungsgemäßen Verfahrens ist im Patentanspruch 15 beschrieben.

Gegenstand der Erfindung ist somit gemäß einem ersten Aspekt ein Beschichtungsmittel zum Aufbringen eines Schutzüberzugs bzw. einer Imprägnierung sowohl auf glatte als auch auf poröse und saugende Untergründe aus der Gruppe Mauerwerk, Natur- und Kunststein, Putz, Beton, gestrichene Fassaden und Holz, um diese gegen Witterungseinflüsse und mechanische Beanspruchung sowie gegen Einwirkung von Chemikalien zu schützen, auf der Basis von natürlichen und/oder synthetischen Wachsen sowie gegebenenfalls Polymeren und üblichen Zusätzen, dispergiert in einer flüssigen Träger-Komponente, das dadurch gekennzeichnet ist, dass es die folgenden Komponenten, jeweils bezogen auf das Gesamtgewicht des Beschichtungsmittels, umfasst:
a) 10 bis 50 Gew.-%, vorzugsweise 15 bis 35 Gew.-%, einer Wirkstoff-Komponente, bestehend aus einem oder mehreren natürlichen und/oder synthetischen Wachsen mit einem Schmelzpunkt (Fp.) von 50 bis 90°C und einem Tropfpunkt zwischen 80 und 110°C, einer Säurezahl von 2 bis 20 mg KOH/g und einer Verseifungszahl von 2 bis 25 mg KOH/g, im Gemisch mit einem harten oder plastischen Mikrowachs und Tafelparaffin (Kp. = 52 bis 54°C) und einem oder mehreren Polymeren, ausgewählt aus der Gruppe Poly(meth)-acrylsäure, Poly(meth)acrylat, gegebenenfalls modifiziertes Polysiloxan, gegebenenfalls modürziertes Polyurethan oder Vorläufer davon, Siloxanharz, Acrylharz und Polysiloxan-Copolymer. sowie gegebenenfalls pyrogenem Siliciumdioxid,
b) 50 bis 90 Gew.-%, vorzugsweise 60 bis 85 Gew.-%, einer flüssigen Trägerkomponente, bestehend aus Wasser und/oder einem organischen Lösungsmittel, ausgewählt aus der Gruppe der aliphatischen C₆-C₁₀-Kohlenwasserstoffe, Lackbenzin, Testbenzin, Petrolether, Cyclohexan, Decalin, Xylole, Solvent-Naphtha, Terpene und der Alkyl- und Alkoxyalkylester von C₂-C₆-Fettsäuren, gegebenenfalls im Gemisch mit mindestens einem alkoholischen Co-Lösungsmittel, ausgewählt aus niederen C₂-C₄-Alkoholen, Ethylenglycol, Diethylenglycol, Tetramethylenglycol und höheren Polyalkylenglycolen und Polyolen und ihren Ester- und/oder Ether-Derivaten, und
c) 0,1 bis 35 Gew.-%, vorzugsweise 0,1 bis 10 Gew.-%, eines oder mehrerer üblicher Zusätze, ausgewählt aus der Gruppe Netzmittel, Verlaufmittel, Dispergiermittel, Emulgiermittel, Stabilisatoren, Schutzkolloide, Füllstoffe, Riechstoffe, Konservierungsmittel, Hautschutzmittel, Mattierungsmittel, Pigmente, Farbstoffe und/oder Farbtönungsmittel.

Das Wachs in der Komponente (a) wird vorzugsweise ausgewählt aus der Gruppe der natürlichen Wachse, insbesondere Candelilla-, Camauba-, Japan-, Espartogras-, Kork-, Guaruma-, Reiskeimöl-, Zuckerrohr-, Ouricury- und Montanwachs, der tierischen Wachse, insbesondere Bienenwachs, Schellack-Wachs, Walrat, Lanolin (Wollwachs) und Bürzelfett; der Mineralwachse, insbesondere Ceresin, Ozokerit (Erdwachs), Petrolatum, Paraffin- und Mikro-Wachse, und/oder der synthetischen Wachse (Kunstwachse), insbesondere Hoechst- und BASF-Wachse, hydriertes Jojoba-Öl, Veba- und Sasol-Wachse, gegebenenfalls oxidierte Poyethylenwachse und Polywachse (Polyethylenglycolwachse), Silikonwachse und Esterwachse und synthetischen Mikrowachse.

Bei dem Polymer in der Komponente (a) handelt es sich vorzugsweise um Poly(meth)acrylsäure, Poly(meth)acrylat, gegebenenfalls modifiziertes Polysiloxan und/oder gegebenenfalls modifiziertes Polyurethan oder einen Vorläufer davon, die vorzugsweise frei von Fluor und Chlor, insbesondere frei von Fluor, sind.

Bei der Komponente (b) des erfindungsgemäßen Beschichtungsmittels handelt es sich vorzugsweise um Wasser und/oder eine organische Flüssigkeit, ausgewählt aus der Gruppe der Lösungsmittel auf Kohlenwasserstoffbasis, insbesondere der aliphatischen Kohlenwasserstoffe, speziell Benzine (C₆₋₁₀-Kohlenwasserstoffe), Lackbenzin, Testbenzin, Petrolether, Cyclohexan, Decalin, Methylcyclohexan, der Aromaten, wie Xylole und Solvent-Naphtha, Terpene (alicyclisch, monocyclisch, bicyclisch) und deren Derivaten, der Alkyl- und Alkoxyalkylester von niederen (C₂-C₆)-Fettsäuren, insbesondere von Essigsäure, wie Butylacetat, Isobutylacetat, Ethylacetat, Methoxypropylacetat, Ethoxyethylacetat und Ethylglycolacetat, und der Ketone, wie Aceton, Methylisobutylketon und Methylethylketon, der Glycoletherester, wie Ethylglycolacetat und Methoxybutylacetat, gegebenenfalls im Gemisch mit mindestens einer alkoholischen Colösungsmittel-Komponente, vorzugsweise niederen Alkoholen mit 2 bis 4 Kohlenstoffatomen wie insbesondere Ethanol und Propanol, Diolen, insbesondere Ethylenglycol, Diethylenglycol, Tetramethylenglycol und höheren Polyalkylenglycolen und Polyolen, insbesondere Glycerin und ihren Esterund/oder Etherderivaten.

Bei der Komponente (c) des erfindungsgemäßen Beschichtungsmittels handelt es sich vorzugsweise um ein oder mehrere Tenside (Dispergier- und Emulgiermittel), insbesondere anionische Tenside, speziell Seifen und Alkylbenzolsulfate (z.B. Dodecylbenzolsulfonat, Alkylnaphthalinsulfonat) oder Alkansulfonate, oder kationische Tenside, speziell Benzalkoniumchlorid, Ammoniumsalze, speziell Trimethylcetylammoniuchlorid, Aminsalze und Pyridiniumsalze oder nicht-ionische Tenside, speziell Alkylphenylpolyglycole.

Als Füllstoff enthält die Komponente (c) vorzugsweise Sand (Siliciumdioxid), Kaolin, Ton, Magnesia, Kieselgur, Kalktuff, Bimsstein, Quarz und/oder Gips in Form von fein dispergierten Teilchen mit einem mittleren Teilchen-Durchmesser von 0,5 bis 500, vorzugsweise von 1 bis 100 µm, und/oder gefälltes SiO₂ als Mattierungsmittel.

Als Pigment enthält die Komponente (c) des erfindungsgemäßen Beschichtungsmittels vorzugsweise ein in dem Trägermedium unlösliches lichtechtes und chemikalienbeständiges anorganisches und/oder organisches Weißpigment (insbesondere Rutil-Titandioxid), Schwarzpigment oder Buntpigment (insbesondere einen RAL-, Alpina- und/oder PUR-Farbstoff bzw. -Lack).

Besonders vorteilhafte Ausführungsformen des erfindungsgemäßen Beschichtungsmittels sind folgende:
ein Beschichtungsmittel mit der oben genannten Zusammensetzung, das dadurch gekennzeichnet ist, daß es als Wirkstoff-Komponente (a) mindestens ein natürliches und/oder synthetisches Wachs mit einem Schmelzpunkt (Fp.) von 50 bis 90°C und einem Tropfpunkt zwischen 80 und 110°C, einer Säurezahl von 2 bis 20 mg KOH/g und einer Verseifungszahl von 2 bis 25 mg KOH/g, gegebenenfalls im Gemisch mit einem harten oder plastischen Mikrowachs und Tafelparaffin (Kp = 52 bis 54°C), dispergiert in Testbenzin, einem Gemisch aus paraffinischen, naphthenischen und aromatischen Kohlenwasserstoffen im C₉-C₁₂-Bereich, vorzugsweise mit einem Kp. von 130 bis 220°C, als flüssiger Trägerkomponente (b), enthält;
ein Beschichtungsmittel mit der oben genannten Zusammensetzung, das dadurch gekennzeichnet ist, daß es als Wirkstoff-Komponente (a) mindestens ein natürliches und/oder synthetisches Wachs mit einem Schmelzpunkt (Fp.) von 50 bis 90°C und einem Tropfpunkt zwischen 80 und 110°C, einer Säurezahl von 2 bis 20 mg KOH/g und einer Verseifungszahl von 2 bis 25 mg KOH/g, gegebenenfalls im Gemisch mit einem harten oder plastischen Mikrowachs und Tafelparaffin (Kp = 52 bis 54°C) sowie im Gemisch mit einem Siloxan- und/oder Acrylharz, dispergiert in Testbenzin, einem Gemisch aus paraffinischen, naphthenischen und aromatischen Kohlenwasserstoffen im C₉-C₁₂-Bereich, vorzugsweise mit einem Kp. von 130 bis 220°C, als flüssiger Tragerkomponente (b), enthält;
ein Beschichtungsmittel mit der oben genannten Zusammensetzung, das dadurch gekennzeichnet ist, daß es als Wirkstoff-Komponente (a) mindestens ein natürliches und/oder synthetisches Wachs mit einem Schmelzpunkt (Fp.) von 50 bis 90°C, einem Tropfpunkt zwischen 80 und 110°C und einer Säurezahl von 2 bis 20 mg KOH/g und einer Verseifungszahl von 2 bis 25 mg KOH/g, gegebenenfalls im Gemisch mit einem harten oder plastischen Mikrowachs und Tafelparaffin (Kp = 52 bis 54°C), vorzugsweise mindestens ein Esterwachs mit einem Fp. von 60 bis 90°C und/oder ein Ethylen-Copolymer-Wachs oder ein Styrolacrylat-Wachs, emulgiert in Wasser als flüssiger Trägerkomponente (b) unter Bildung einer nicht-ionogenen Emulsion, enthält;
ein Beschichtungsmittel mit der oben genannten Zusammensetzung, das dadurch gekennzeichnet ist, daß es als Wirkstoff-Komponente (a) mindestens ein Polyesterpolyol (insbesondere Desmophen 650), mindestens ein Polysiloxan-Copolymer (insbesondere Byk 300) sowie gegebenenfalls pyrogene Kieselsäure (insbesondere Aerosil 200) und mindestens ein aliphatisches Polyisocyanat (insbesondere Desmodur N75) als Härter und als flüssige Trägerkomponente (b) ein Gemisch aus Essigsäureestern, vorzugsweise 1-Methoxy-2-propylacetat und Essigsäurebutylester, und einem oder mehreren Xylolen sowie zusätzlich gegebenenfalls gefälltes Siliciumdioxid (insbesondere das Mattierungsmittel OK500) und/oder mindestens ein lichtechtes, chemikalienbeständiges Pigment (insbesondere Rutil-Titandioxid) enthält;
   wobei in dem vorgenannten Beschichtungsmittel die flüssige Trägerkomponente (b) besonders bevorzugt besteht zu 70 bis 90 Gew.-% aus einem oder mehr gegebenenfalls substituierten Essigsäureestem und zu 30 bis 10 Gew.-% aus einem Xylol-lsomerengemisch;
   oder die flüssige Trägerkomponente (b) ganz besonders bevorzugt besteht aus
   75 Gew.-% 1-Methoxy-2-propylacetat
   12,5 Gew.-% Essigsäurebutylester
   12,5 Gew.-% Xylol-Isomerengemisch;
   oder wobei in dem vorgenannten Beschichtungsmittel die Wirkstoff-Komponente (a) besteht zu 20 bis 30 Gew.-%, vorzugsweise zu 25 Gew.-%, aus mindestens einem Polyesterpolyol, insbesondere Desmophen 650, zu 20 bis 30 Gew.-%, vorzugsweise zu 25 Gew.-%, aus mindestens einem aliphatischen Polyisocyanat, insbesondere Desmodur N75, zu 0,5 bis 5 Gew.-% aus mindestens einem Polyslloxan-Copolymer, insbesondere Byk 300, zu 0,1 bis 3 Gew.-% aus pyrogenem Siliciumdioxid, insbesondere Aerosil 200, und zum Rest aus dem oben genannten Lösungsmittelgemisch;
   wobei besonders bevorzugt 4 bis 6 Gew.-Teile des Lösungsmittelgemisches in der Wirkstoff-Komponente (a) durch die gleiche Menge gefälltes Siliciumdioxid, insbesondere das Mattierungsmittel OK 500, und/oder 15 bis 25 Gew.-Teile des Lösungsmittelgemisches in der Wirkstoff-Komponente (a) durch die gleiche Menge mindestens eines lichtechten, chemikalienbeständigen Pigments, insbesondere Rutil-Titandioxid, ersetzt sein können;
ein Beschichtungsmittel mit der oben genannten Zusammensetzung, das dadurch gekennzeichnet ist, daß es sich dabei um eine farblose Einkomponenten-Flüssigkeit auf Basis natürlicher und/oder synthetischer Wachse, suspendiert in Testbenzin, für Fassaden aus Naturstein, Kunststein oder Beton handelt, die in einer Auftragsmenge von 100 bis 300, vorzugsweise von 150 bis 250 g/m², in einer oder mehreren Schichten auf den Untergrund aufgetragen wird;
ein Beschichtungsmittel mit der oben genannten Zusammensetzung, das dadurch gekennzeichnet, daß es sich dabei um eine farblose Einkomponenten-Flüssigkeit auf Siloxan-Acrylharz-Naturwachs-Basis, emulgiert in Testbenzin, für nicht-begangene oder befahrene mineralische, silicathaltige Untergründe im Wohn-, Verwaltungs- und Ingenieurbau wie Beton, anorganische Putze, Klinker, Natur- und Betonwerksteine handelt, die in einer Auftragsmenge von 100 bis 500, vorzugsweise von 250 bis 350 ml/m², in einer oder mehreren Schichten auf den Untergrund aufgetragen wird;
ein Beschichtungsmittel mit der oben genannten Zusammensetzung, das dadurch gekennzeichnet ist, daß es sich dabei um eine weißliche wäßrige Einkomponenten-Emulsion auf Basis von Netzmitteln, natürlichen und/oder synthetischen Wachsen, Polymeren und Stabilisatoren in Wasser handelt für den Auftrag in einer oder mehreren Schichten auf Fassaden aus Natur- und Kunststein oder Beton in einer Auftragsmenge von 100 bis 500, vorzugsweise 150 bis 350 g/m²;
ein Beschichtungsmittel mit der oben genannten Zusammensetzung, das dadurch gekennzeichnet ist, daß es sich dabei um einen farblosen oder bunten Zweikomponenten-Lack für die Beschichtung von Fassaden-, Metall-, Holzund Kunststoffflächen im Innen- und Außenbereich handelt, der in einer oder mehreren Schichten in einer Auftragsmenge von 100 bis 500, vorzugsweise von 200 bis 300 g/m², auf den Untergrund aufgebracht wird und besteht aus der Wirkstoff-Komponente (a) mit der folgenden Zusammensetzung:
   51,8 Gew.-% Polyesterpolyol (vorzugsweise Desmodur oder Desmophen)
   44,7 Gew.-% aliphatisches Polyisocyanat (vorzugsweise Hexamethylendiisocyanat) als Härter,
   0,5 Gew.-% Polysiloxan-Copolymer und
   3,0 Gew.-% pyrogene Kieselsäure,
   und der flüssigen Trägerkomponente (b) mit der folgenden Zusammensetzung:
   75 Gew.-% 1-Methoxy-2-propylacetat
   12,5 Gew.-% Xylol-Isomerengemisch
   12,5 Gew.-% Essigsäurebutylester,
wobei die Komponenten (a) und (b) im Gewichtsverhältnis (a): (b) = (10 bis 40 Gew.-%): (90 bis 60 Gew.-%) vorliegen, mit der Maßgabe, daß die Härterkomponente erst unmittelbar vor dem Auftrag zugegeben wird, und wobei 4 bis 6 Gew.-Teile der flüssigen Trägerkomponente (b) durch die gleiche Menge gefälltes Siliciumdioxid, vorzugsweise das Mattierungsmittel OK 500, und/oder 15 bis 25 Gew.-Teile der flüssigen Trägerkomponente (b) durch die gleiche Menge mindestens eines lichtechten chemikalienbeständigen Pigments, vorzugsweise Rutil-Titandioxid, ersetzt sein können.

Gemäß einem zweiten Aspekt betrifft die vorliegende Erfindung ein Verfahren zur Herstellung des Beschichtungsmittels, wie es vorstehend beschrieben worden ist, das dadurch gekennzeichnet ist, daß man die Wirkstoff-Komponente (a), z.B. eine solche aus Polyesterpolyol, Polysiloxan-Copolymer und pyrogenem Siliciumdioxid, gegebenenfalls unter Zugabe von gefälltem Siliciumdioxid und/oder Pigment, mit der flüssigen Trägerkomponente (b), z.B. einer solchen aus Essigsäurealkylestern und Xylol-lsomeren, im Gewichtsverhältnis (a): (b) = (40 bis 60): (60 bis 40), vorzugsweise 50:50, mischt, unmittelbar vor der Verwendung gegebenenfalls die Härterkomponente zumischt und das Ganze mit der flüssigen Trägerkomponente (b) verdünnt zur Einstellung der Verarbeitungskonsistenz, die von dem jeweils angewendeten Verarbeitungsverfahren abhängt.

Das erfindungsgemäße Verfahren wird vorzugsweise so durchgeführt, daß man die eingesetzten natürlichen und/oder synthetischen Wachse, vorzugsweise solche mit einem Schmelzpunkt (Fp.) von 50 bis 90°C und einem Tropfpunkt von 80 bis 110°C, mit einer Säurezahl von 2 bis 20 mg KOH/g und einer Verseifungszahl von 2 bis 25 KOH/g in der gewünschten Konzentration aufschmilzt, die Schmelze auf etwa 100 bis 120°C erwärmt. Testbenzin, ein Gemisch aus paraffinischen, naphthenischen und aromatischen Kohlenwasserstoffen im C₉-C₁₂-Bereich mit einem Kp. von vorzugsweise 130 bis 220°C, oder Wasser, das auf eine Temperatur von etwa 40°C vorerwärmt worden ist, unter Rühren langsam in die Wachsschmelze einlaufen läßt und anschließend unter Rühren die Lösung bzw. Dispersion auf Zimmertemperatur abkühlt, wobei der Wachsanteil in einem Drittel des Lösungs- bzw. Dispergiermittels bei etwa 100 bis 120°C gelöst und der Rest des Lösungs- bzw. Dispergiermittels kalt eingerührt und anschließend unter gleichzeitiger Kühlung mindestens 1 h lang intensiv gerührt wird unter Bildung einer besonders feinen Dispersität mit einer hervorragenden Dispersions-Stabilität, die vor dem jeweiligen Ansatz über Nacht stehen gelassen und vor dem Abfüllen noch einmal kräftig durchgerührt wird.

In dem vorstehend beschriebenen Verfahren verwendet man vorzugsweise 10 bis 30 Gew.-Teile eines Gemisches aus flüssigem Bohnerwachs, das insbesondere besteht aus dem Spezialwachs 2336 der Firma Kahl & Co., Paraffin und plastischem oder hartem Mikrowachs der Firma Kahl & Co. in Mengenanteilen von 4 bis 8, 1 bis 6 bzw. 1 bis 5 Gew.-Teilen in der genannten Reihenfolge, kombiniert mit 70 bis 90 Gew.-Teilen Testbenzin.

Besonders bevorzugt wird als Abmischkomponente Syntran 1066 der Firma Worlée-Chemie GmbH, eine 40 %/60 %-Styrolacrylat/Wasser-Dispersion in Kombination mit nicht-ionischen und anionischen Selbstglanzemulsionen verwendet.

Gemäß einem dritten Aspekt betrifft die vorliegende Erfindung die Verwendung des vorstehend beschriebenen Beschichtungsmittels zum Aufbringen eines Schutzüberzugs bzw. einer Imprägnierung auf harte Oberflächen, vorzugsweise gegebenenfalls lackierte Stein-, Keramik-, Glas-, Metall-, Holz- und Kunststoff-Oberflächen, um sie gegen Witterungseinflüsse und mechanische Beanspruchung sowie gegen Einwirkung von Chemikalien zu schützen und um die Entfernung von darauf aufgebrachten unerwünschten Verschmutzungen, Schmierereien und wilden Plakatierungen zu erleichtern, ohne den Schutzüberzug bzw. die Imprägnierung in seiner (ihrer) Funktion zu beeinträchtigen.

Mit dem erfindungsgemäßen Beschichtungsmittel lassen sich Schutzübeizüge, insbesondere Anti-Graffiti-Schutz-Beschichtungen bzw. -Imprägnierungen, auf die verschiedensten Untergründe, wie Naturstein, Sandstein, Klinkerstein, Beton, Putz, gestrichene Fassaden und Kunststoffflächen, sowohl im Außen- als auch im Innenbereich aufbringen, um so eine wirksame Prophylaxe gegen ...

Witterungseinflüsse und mechanische Beanspruchung sowie gegen die Einwirkung von Chemikalien, insbesondere Graffiti und sonstige unerwünschte Schmierereien, zu betreiben. Die unter Verwendung des erfindungsgemäßen Beschichtungsmittels aufgebrachten Anti-Graffiti-Schutz-Beschichtungen bzw. -Imprägnierungen sind dabei keine Opferschichten, die nach jeder Graffiti-Entfernung wieder erneuert werden müssen. Sie sollten jedoch nach drei bis vier Reinigungen an den betreffenden Stellen nachbeschichtet werden.

Das erfindungsgemäße Beschichtungsmittel läßt sich in unverdünnter oder verdünnter Form, vorzugsweise mit einem Pinsel, Farbroller, einer Malerbürste oder einem Sprühgerät auf die trockenen, vorzugsweise vorher gereinigten Untergründe auftragen. Je nach Saugfähigkeit des Untergrundes erfolgt der Auftrag ein- bis dreimal unter zwischenzeitlichem Antrocknenlassen. Von dem so behandelten Untergrund, der bereits nach mehrstündigem Trocknen gegen Witterungseinflüsse und mechanischen Beanspruchung wirksam geschützt ist, lassen sich aufgebrachte Graffiti und sonstige Schmierereien auf einfache und wirtschaftliche Weise mit einem Graffitientferner, vorzugsweise Dekontaminol, mittels Putzlappen oder Hochdruckreiniger leicht wieder entfernen, ohne daß es zu einer Beschädigung des Untergrundes kommt.

Durch Aufbringen von Schutzüberzügen bzw. Imprägnierungen unter Verwendung der erfindungsgemäßen Beschichtungsmittel sowohl auf glatte als auch auf poröse und saugende Untergründe (Mauerwerk, Natur- und Kunststein, Putz, Beton, gestrichene Fassaden) läßt sich eine wirkungsvolle Vorbeugung gegen Farbschmierereien und wilde Plakatierungen treiben, da in solche Materialien die unerwünschten Verschmutzungen zum Teil so stark einziehen, daß eine Reinigung trotz wirksamer Graffitientfernungsmittel wie Dekontaminol sehr aufwendig, mühevoll und darüber hinaus kostspielig ist. Mit dem erfindungsgemäßen Beschichtungsmittel geschützte Flächen lassen sich dagegen erheblich leichter mit Graffitientfernungsmitteln, insbesondere Dekontaminol, säubern, wobei das Dekontaminol dann reichlich mit Seifenwasser verdünnt werden kann und dennoch seine volle Wirkung zeigt. Dadurch:läßt sich eine Zeit- und Materialersparnis von etwa 40 % erzielen.

Die erfindungsgemäßen Beschichtungsmittel werden auf die saubere und trokkene Oberfläche mit Pinsel, Bürste, Walze oder Sprühgerät aufgetragen und sie trocknen nahezu unsichtbar auf. Ein auf diese Weise aufgebrachter Überzug bzw. Imprägnierung wird bei einer Säuberung mit Dekontaminol nicht entfernt, er (sie) ist witterungsbeständig und schützt den darunterliegenden Untergrund (z.B. Bausubstanz) sogar vor den Folgen der Luftverschmutzung. Auf den so geschützten Flächen haften keine wilden Plakatierungen. Die Plakate lassen sich durch einfaches Abziehen leicht beseitigen.

Bei den erfindungsgemäß verwendbaren Isocyanaten handelt es sich vorzugsweise um Polyisocyanate, insbesondere Diisocyanate, aber auch Tri- und Tetraisocyanate oder Vorpolymere davon, aromatischer, aromatisch-aliphatischer, aliphatischer oder cycloaliphatischer Natur, speziell um Hexamethylendiisocyanat, Phenylen-1,4- diisocyanat, Toluylen-2,4- und -2,6-diisocyanat, Biphenyl-4,4'- diisocyanat, Diphenylmethan-4,4'-diisocyanat und Naphthalin-1,5-diisocyanat, 2,4- und 2,6-Toluol-diisocyanat, 4,4'-Dicyclohexylmethandiisocyanat und 3-Methylisocyanat-3,5,5-dimethylcyclohexylisocyanat, 1-Methyl-2,4-diisocyanato-cyclohexan, Isophorondiisocyanat, 2,4,4-Trimethyl-1,6-diisocyanatohexan, N,N',N"-Tri-(6-isocyanatohexyl)biuret, das Reaktionsprodukt, das entsteht aus 3 Mol Isophorondiisocyanat und 1 Mol Wasser, sowie das Additionsprodukt, das entsteht aus 3 Mol Isophorondiisocyanat und 1 Mol 1,1,1-Trimethylolpropan. Ein besonders gut geeignetes Isocyanat ist beispielsweise das aliphatische Polyisocyanat Desmodur N 75 der Firma Bayer AG.

Beispiele für erfindungsgemäß bevorzugt verwendbare Polyesterpolyole sind die Kondensationsprodukte von Di- und/oder Polycarbonsäuren mit Diolen und/oder Polyolen; die Polykondensationsprodukte von Adipinsäure, Phthalsäure, Tetrahydrophthalsäure, Hexahydrophthalsäure und Endomethylentetrahydrophthalsäure mit Ethylenglycol, Butan-1,4-diol, Diethylenglycol, Triethylenglycol, Hexan-1,6-diol, 2,2-Dimethylpropan-1,3-diol, 1,1,1-Trimethylolpropan und Hexan-1,2,6-triol sowie die Polymerisationsprodukte von Lactonen wie ε-Caprolacton. Die Molekulargewichte liegen in der Regel zwischen 100 und 10 000, vorzugsweise zwischen 400 und 6000. Ein besonders gut geeignetes Beispiel ist Desmophen 650 von der Firma Bayer AG.

Der hier verwendete Ausdruck "(Meth)Acrylsäure" bzw. "(Meth)Acrylat" steht für "Acrylsäure bzw. Acrylat" und "Methacrylsäure bzw. Methacrylat".

Unter den hier genannten Alkylgruppen sind unverzweigte oder verzweigte, gegebenenfalls substituierte Alkylgruppen mit vorzugsweise 1 bis 24 Kohlenstoffatomen, insbesondere 1 bis 18 Kohlenstoffatomen, speziell 1 bis 12 Kohlenstoffatomen zu verstehen.

Unter dem hier verwendeten Ausdruck "niedere Alkylgruppe" ist eine unverzweigte oder verzweigte, gegebenenfalls substituierte Alkylgruppe mit vorzugsweise 1 bis 9, insbesondere 1 bis 6, speziell 1 bis 4 Kohlenstoffatomen zu verstehen.

Bei dem hier verwendeten Ausdruck "Lösung" bzw. "Lösungsmittel" handelt es sich nicht immer um eine Lösung bzw. ein Lösungsmittel im strengen Sinne, sondern gelegentlich auch um eine Dispersion oder Emulsion bzw. ein Dispergier- oder Emulgiermittel.

Unter dem hier verwendeten Ausdruck "Beschichtung" ist nicht nur eine Beschichtung im eigentlichen Sinne, d.h. das Aufbringen einer durchgehenden Überzugsschicht, sondern auch eine Imprägnierung zu verstehen, die in glatte, poröse und saugende Oberflächen einzieht, ohne deren Wasserdampfdurchlässigkeit zu beeinträchtigen (zu verringern). Beschichtungen bzw. Überzüge im erstgenannten Sinne ergibt vorzugsweise das vorstehend und nachfolgend beschriebene erfindungsgemäße Zweikomponenten-Beschichtungsmittel, während die vorstehend und nachfolgend beschriebenen erfindungsgemäßen Einkomponenten-Beschichtungsmittel in erster Linie Imprägnierungs-Überzüge ergeben, die in den damit beschichteten Untergrund eindringen, und dabei wasserdampfdurchlässig bleiben.

Nachstehend werden besonders bevorzugte Beschichtungsmittel der Erfindung (AGSB I, AGSB II, AGSB IV und AGSB V) und deren vorteilhafte Eigenschaften näher erläutert.

### Beschichtungsmittel AGSB I (besonders geeignet als Fassadenschutz, Parolenschutz)

Dabei handelt es sich um eine gebrauchsfertige Einkomponenten-Flüssigkeit (farblos bis weißlich) auf Basis natürlicher und/oder synthetischer Wachse, insbesondere Mikrowachse, suspendiert in paraffinischen und aromatischen Kohlenwasserstoffen, speziell in Testbenzin. Besonders geeignete Wachse sind die Spezialwachse Typ 2523, 2538, 4319, 4329, 7655, 7765 und 2336 der Firma Kahl & Co., Schmelzpunkt von 50 bis 90°C, mit einem Tropfpunkt zwischen 80 und 110°C, einer Säurezahl von 5 bis 15 mg KOH/g und einer Verseifungszahl von 2 bis 20 mg KOH/g.

Die genannten Wachse sind fertige Kompositionen, die ohne weitere Zusätze vorzugsweise in Testbenzin dispergiert werden können. In Konzentrationen von normalerweise 10 bis 15 % bilden sie flüssige Wachse, die harte, widerstandsfähige, hochglänzende Wachsfilme ergeben. Besonders geeignet ist das Spezialwachs 2336, das sich ausgezeichnet eignet zur gemeinsamen Verarbeitung mit Paraffin und Mikrowachs. Daraus lassen sich die folgenden beispielhaften Rezepturen herstellen:
a)
   5 Teile Spezialwachs 2336
   1 Teil plastisches Mikrowachs 1847(der Firma Kahl & Co.)
   5 Teile Tafelparaffin (52 bis 54°C)
   89 Teile Testbenzin
b)
   6,0 Teile Spezialwachs 2336
   2,5 Teile hartes Mikrowachs 7475 oder 2560 (der Firma Kahl & Co.)
   1,0 Teile plastisches Mikrowachs 1847(der Firma Kahl & Co.)
   2,5 Teile Tafelparaffin (52 bis 54°C)
   88,0 Teile Testbenzin

Die Herstellung erfolgt in der Weise, daß man den Wachsanteil in der gewünschten Konzentration aufschmilzt und die Schmelze auf etwa 100 bis 120°C erwärmt. Getrennt davon erwärmt man das Testbenzin auf eine Temperatur von etwa 40°C. Dieses vorgewärmte Lösungsmittel läßt man unter Rühren langsam in die Wachsschmelze einlaufen und kühlt anschließend unter Rühren die Lösung auf Zimmertemperatur ab.

Der Wachsanteil wird in einem Drittel des Lösungsmittels bei etwa 100 bis 120°C gelöst, der Rest des Lösungsmittels wird kalt eingerührt und anschließend unter gleichzeitiger Kühlung mindestens 1 h lang intensiv gerührt.

Zur Erreichung einer besonders feinen Dispersität und damit einer hervorragenden Stabilität der Dispersion ist es von Vorteil, wenn man den jeweiligen Ansatz über Nacht stehen läßt und ihn vor dem Abfüllen noch einmal kräftig durchrührt.

Das erfindungsgemäße Beschichtungsmittel AGSB I ist unbegrenzt haltbar und läßt sich vorzugsweise auf Fassaden aus Naturstein, Kalkstein oder Beton in einer Auftragsmenge von vorzugsweise 100 bis 500 g/m², insbesondere 150 bis 350 g/m², in vorzugsweise 1 bis 3 Schichten aufsprühen oder aufstreichen.

### Beschichtungsmittel AGSB II (besonders geeignet als Fassadenschutz und Parolenschutz)

Dabei handelt es sich um eine gebrauchsfertige wäßrige Einkomponenten-Emulsion auf Basis von Netzmitteln, natürlichen und/oder synthetischen Wachsen, Polymeren und Stabilisatoren. Es ist flüssig, von weißlicher Farbe und frei von organischen Lösungsmitteln. Es ist mindestens 12 Monate lang lagerstabil und läßt sich auf Fassaden aus Natur- und Kunststein oder Beton aufbringen. Die Auftragsmenge liegt zweckmäßig zwischen 100 und 500 g/m², vorzugsweise zwischen 150 und 350 g/m². Es ist zu 94 % biologisch abbaubar nach der OECD-Methode und erfüllt das Waschmittelgesetz. Es handelt sich dabei um eine nicht-ionogene Emulsion von hauptsächlich Esterwachsen (mit einer Schmelztemperatur von vorzugsweise 50 bis 90°C) in Wasser.

Besonders geeignete Komponenten des erfindungsgemäßen Produkts AGSB II sind die Handelsprodukte Marlon PS 65 der Firma Hüls AG (ein Dodecylbenzolsulfonsäuresalz), Hydorol M der Firma Biochema Schwaben, Syntran 1066 und Syntran 1445 der Firma Kahl & Co. und Wachs Nr. 4035 der Firma Kahl & Co.

Der Feststoffgehalt dieses Produkts beträgt vorzugsweise 40,0 ± 1 % und als Polymer enthält es vorzugsweise Ethylencopolymer. Die daraus hergestellten Filme sind hochglänzend und rutschfest.

Bei der Wirkstoffkomponente Syntran 1066 handelt es sich um eine 40 %ige Styrolacrylat-Dispersion in Wasser. Die obengenannte Styrolacrylat-Dispersion ist hervorragend verträglich mit anderen Polymerdispersionen, Wachsdipsersionen und Weichmachern. Sie ist insbesondere geeignet als Abmischkomponente für die Kombination mit nicht-ionischen und anionischen Selbstglanz-Emulsionen. Das Produkt trägt zur Erhöhung von Filmhärte, Glanz und Wasserfestigkeit bei.

### Erfindungsgemäßes Beschichtungsmittel AGSB IV (insbesondere verwendbar als Fassaden-, Metall- und Holzflächenschutz)

Dabei handelt es sich um einen Zweikomponenten-Lack zum Beschichten von Fassaden-, Metall-, Kunststoff- und Holzflächen im Innen- und Außenbereich mit einer Topfzeit von etwa 6 h bei 20°C, bestehend aus zwei klaren, leicht gelblichen bzw. pigmentierten Flüssigkeiten. Er führt zu Schutzüberzügen, farblos oder bunt, mit hoher Abriebsfestigkeit und wird in einer Auftragsmenge von vorzugsweise 100 bis 500 g/m², insbesondere 150 bis 350 g/m², in 1 bis 3 Anstrichen aufgebracht.

Er besteht vorzugsweise aus den beiden Komponenten Grundrezept A und Lösungsmittelgemisch B, wobei in ersterem die Härterkomponente erst unmittelbar vor der Verarbeitung zugemischt wird. Die Mischung ergibt einen transparenten, glänzenden Schutzüberzug.

| Grundrezept A | |
|---|---|
| Polyesterpolyol, vorzugsweise Desmophen 650 der Firma Bayer AG | ca. 25 Gew.-Teile |
| Polysiloxan-Copolymer, vorzugsweise Byk 300 der Firma BYK-Chemie | ca. 0,5 Gew.-Teile |
| pyrogenes Siliciumdioxid, vorzugsweise Aerosol 200 der Firma Degussa | ca. 0,33 Gew.-Teile |
| Lösungsmittelgemisch B | ca. 50 Gew.-Teile |
| aliphatisches Polyisocyanat (Härterkomponente), vorzugsweise Desmodur N 75 der Firma Bayer AG | ca. 25 Gew.-Teile |

| Lösungsmittelgemisch B | |
|---|---|
| 1-Methoxy-2-propylacetat | ca. 85 Gew.-Teile |
| Xylol-lsomerengemisch | ca. 12,5 Gew.-Teile |
| Essigsäurebutylester | ca. 12,5 Gew.-Teile |

Unmittelbar vor der Verarbeitung wird die Härterkomponente dem Grundrezept A zugesetzt und eingemischt, anschließend wird mit dem Lösungsmittelgemisch B die Verarbeitungskonsistenz eingestellt. Die Menge des Lösungsmittelgemisches B ist dem jeweiligen Verarbeitungsverfahren anzupassen.

### Weitere Zusätze (C)

Wenn 4 bis 6 Gew.-Teile des Lösungsmittelgemisches B in der Grundrezeptur A durch die gleiche Menge an gefälltem Siliciumdioxid, vorzugsweise Mattierungsmittel OK 500 der Firma Degussa, ersetzt werden, erhält man eine transparente, seidenmatte Schutzbeschichtung.

Wenn 15 bis 25 Gew.-Teile des Lösungsmittelgemisches B in der Grundrezeptur A durch die gleiche Menge an lichtechtem, chemikalienbeständigem Pigment, vorzugsweise Rutil-Titandioxid, ersetzt werden, erhält man eine deckende, seidenmatte Schutzbeschichtung.

In beiden Fällen ist die Menge des Lösungsmittelgemisches dem jeweiligen Verarbeitungsverfahren anzupassen.

### Beschichtungsmittel AGSB V (verwendbar insbesondere als Fassadensiegel)

Es handelt sich dabei um eine farblose bis weißliche Einkomponenten-Flüssigkeit auf Siloxan-Acrylharz-Synthese/Naturwachs-Basis mit Testbenzin als Lösungs- bzw. Emulgiermittel für nicht-begangene oder befahrene mineralische, silicathaltige Untergründe im Wohn, Verwaltungs- und Ingenieurbau, wie Beton, anorganische Putze, Klinker, Natur- und Betonwerksteine. Dieses Beschichtungsmittel ist mindestens ein Jahr lagerstabil und es wird in einer Auftragsmenge von 100 bis 500 ml/m², vorzugsweise von 200 bis 400 ml/m², in 1 bis 3 Schichten auf den vorher gereinigten Untergrund aufgebracht.

Mit dem erfindungsgemäßen Beschichtungsmittel AGSB IV entstehen vorzugsweise zusammenhängende Schutzüberzüge im eigentlichen Sinne, während mit den erfindungsgemäßen Beschichtungsmitteln AGSB I, II und V in erster Linie Imprägnierungs-Überzüge (Imprägnierungen) entstehen, die in die Oberfläche der Unterlage, sei sie nun glatt, rauh oder saugend, eindringen und in vollem Umfang wasserdampfdurchlässig sind bzw. bleiben.

Die erfindungsgemäßen Beschichtungsmittel AGSB I, II, IV und V wurden in der Praxis getestet. Die Durchführung dieses Tests und die dabei erzielten Ergebnisse sind in dem nachstehenden Versuchsbericht zusammengefaßt.

### Versuchsbericht

Prüfung der Anti-Graffiti-Schutzbeschichtungen AGSB I, II, IV und V auf unterschiedlichen Untergründen.
1. Stein- und Vollwärmeschutzplatten:
- VM 1/1 - 1/11: Schornsteinklinker gelb; Abmessungen ca: 23,5 x 7 x 11,5 cm³
- VM 2/1 - 2/9: Klinker rot; Abmessungen ca: 23,5 x 7 x 11 cm³
- VM 3/1 - 3/12: Sandsteinplatten hell; Abmessungen ca: 20 x 20 x 1,8 cm³
- VM 4/1 - 4/9: Travertin hell; poliert; Abmessungen ca: 20 x 20 x 2 cm³
- VM 5/1 - 5/9: Granit poliert; Abmessungen ca: 20 x 20 x 2 cm³
- VM 6/1 - 6/3: Betonplatten; Oberfläche glatt; Abmessungen ca: 45 x 7 x 32 cm³
- VM 7: Hartfaserplatte; beschichtet mit AGSB IV pigmentiert ( nähere Einzelheiten s. Tabelle 1)
- VM 8-13: Vollwärmeschulzplatten (VWS); beschichtet mit AGSB IV pigmentiert (nähere Einzelheiten s. Tabelle 1)
- VM 14: Vollwärmeschutzplatten (VWS); beschichtet mit Dispersionsfarbe weiß (nähere Einzelheiten s. Tabelle 1)

2. Farbmaterialien für den Auftrag von Graffitis:
a) Spraydosen mit jeweils 400 ml der folgenden Spritzfarben:
   - VM 15/1: Acrylharzfarbe hellgrün, glänzend, RAL 2011
   - VM 15/2: Acrylharzfarbe rot, glänzend, RAL 2108
   - VM 15/3: Acrylharzfarbe pastell-turkis, RAL 2002
   - VM 15/4: Acrylharzfarbe silberbronze, RAL 1401
   - VM 15/5: Acrylharzfarbe chromgelb, RAL 1801
b) Faserstifte der folgenden Marken:
   - VM 16/1: Edding 800, grün
   - VM 16/2: Edding 800, rot
   - VM 16/3: Edding 3300, schwarz
   - VM 16/4: Marker Stabilo Boss gelb
   - VM 16/5: Marker Stabilo Boss orange

3. Anli-Graffiti-Schutzmittel (gemäß der Erfindung):
- VM 17: Anti-Graffiti-Schutzbeschichtung AGSB I
- VM 18: Anti-Graffiti-Schutzbeschichtung AGSB II
- VM 19: Anti-Graffiti-Schutzbeschichtung AGSB V

4. Reinigungs-und Netzmittel (gemäß DE-PS 4 025 039):
- VM 20: Dekontaminol

**Tabelle 1:**

| Zusammenstellung der mit AGSB IV, pigmentiert, beschichteten Platten | | | |
|---|---|---|---|
| Material | Nr. | Putzart | Farbe |
| Hartfaserplatte 2 cm VM 7 | 1 | | braun |
| VWS-Platte 6 cm VM 8 | 2 | 3 mm Kratzputz Mineralputz System Capactect | grün |
| VWS-Platte 5 cm VM 14 | 3 Kontrollplatte | 1,5 mm Kunststoff-Reibeputz | Latex-Fassadenfarbe weiß, ohne Schutzbeschichtung |
| VWS-Plalte 5 cm VM 9 | 4 | 2 mm Kratzputz Brillux-Mineralputz | braun |
| VWS-Platte 5 cm VM 10 | 5 | 2,5 mm Kratzputz Brillux-Mineralputz | grün |
| VWS-Platte 5 cm VM 11 | 6 | 3 mm Kratzputz Brillux-Mineralputz | braun |
| VWS-Platte 5 cm VM 12 | 7 | Kratzputz 3 mm Körnung System Capactect | grün |
| VWS-Platte 5 cm VM 13 | 8 | 2 mm Kunststoff-Reibeputz System Capactect | Grundbcschichtung: AGSB IV. ocker obere Hälfte zusätzlich mit AGSB IV, farblos |
| Bem.: VWS = Vollwärmeschutz | | | |

### 1. Durchgeführte Untersuchungen

### 1.1 Auftrag der Anti-Graffiti-Schutzbeschichtungen (AGSB)

Auf den VM 1 - G wurden die Antigraffiti-Schutzbeschichtungen AGSB I, II und V (VM 17 bis 19) mit einem Pinsel in jeweils drei Schichten aufgebracht. Die mittleren Naßauftragsmengen
sind in der Tabelle 2 enthalten. Beim Auftrag wurden etwa 2/3 der Oberflächen der VM 1- 6 mit den entsprechenden Anti-Graffiti-Schutzmitteln beschichtet, 1/3 der Oberflächen blieben unbeschichtet. Nach dem Auftrag der AGSB erschienen die geschützten Flächen visuell dunkler bzw. die polierten Flächen wurden matt.

**Tabelle 2:**

| mittlere Naßauftragsmengen in g/m² | | | | | | |
|---|---|---|---|---|---|---|
| Untergrund | Klinker gelb | Klinker rot | Sandstein hell | Travertin poliert | Granit poliert | Beton glatt |
| AGSB I | 338 | 274 | 412 | 160 | 213 | 270 |
| AGSB II | 438 | 193 | 504 | 101 | 119 | 169 |
| AGSB V | 293 | 263 | 498 | 201 | 209 | 265 |

Von den VM 1 - 6 wurde je ein Muster zur Untersuchung der Witterungsbeständigkeit der Beschichtungen zur einjährigen Freibewitterung auf dem Dach eines Hauses ausgelegt.

Die VM 7 - 13 wurden im beschichteten Zustand mit AGSB IV, pigmentiert angeliefert.

### 1.2 Auftrag und Entfernung der Graffitimalerei

Auf den VM 1 - 14 wurden mit den VM 15 und den Faserstiften (VM 16) sowie zusätzlich einer handelsüblichen Spraydose (Alkydharzlackfarbe himmelblau, RAL 5015) Farbbalken bzw. Farbstriche in unterschiedlicher Stärke aufgebracht.

Nach siebentägiger Trockenzeit im Normalklima DIN 50014 -23/50-2 wurden die VM dem Reinigungsprozeß unterzogen.

Der Reinigungsprozeß erfolgte, wenn nicht anders aufgeführt, in folgender Weise:
- Auftrag von Dekontaminol (VM 20) mit dem Pinsel, Schwamm bzw. Rolle in Abhängigkeit von der Oberflächenstruktur des Materials sowohl auf die geschützte als auch auf die nicht mit AGSB geschützte Fläche
- Einwirkzeit des Dekontaminols von etwa 1 bis 2 min
- Intensiveres Verreiben des aufgetragenen Dekontaminols mit einem Schwamm
- Abwischen der angelösten Graffitimalerei und des Dekontaminols mit einem trockenen Lappen, nasses Nachwischen und Begutachtung der Flächen
- Auftragen und verreiben von Dekontaminol auf noch vorhandene Reste von Graffitis, anschließende Reinigung mit einem Kaltwasser-Druckstrahl (p 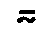 140 - 150 bar) und Begutachtung
- Auftragen und verreiben von Dekontaminol auf weiterhin vorhandene Reste von Graffitis, anschließende Reinigung mit einem Heißwasser-Druckstrahl (p = 70 - 80 bar und t = 100 - 110 °C) und Begutachtung

### 2. Ergebnisse

### Qualitative Beurteilung

Eine qualitative Beurteilung des Reinigungsprozesses wird in den Tabellen 3 - 7 gegeben. Die Bewertung erfolgte in Anlehnung an DIN 53 230 Abschnitt 2.1 "Feste Bewertungsskala". Danach wurde für die Beurteilung nach dem Reinigungsprozeß der restlosen Entfernung des entsprechenden Farbbalkens die Kennzahl 0 und der vollständigen Erhaltung des Farbbalkens die Kennzahl 5 zugeordnet Die Zwischenstufen werden entsprechend mit den Zahlen 1 - 4 gekennzeichnet.

Allgemein wurde festgestellt, daß bei den meisten Versuchsmustern schon die Handreinigung mit Dekontaminol einen guten Reinigungseffekt sowohl auf den mit AGSB geschützten Flächenbereichen als auch auf den ungeschützten Bereichen zeigte. Ausnahme bildeten die Sandsteinplatten und einige Klinker, wo die Schutzwirkung der AGSB deutlich wird und die Farbbalken auf den ungeschützten Flachen sich trotz intensiver Reinigung mit Dekontaminol und einem Heißwasser-Hochdruckstrahl nicht entfernen ließen.

Die Schichten mit AGSB I und AGSB V waren nach dem Reinigungsprozeß noch vorhanden, dagegen wirkte AGSB II teilweise als Opferschicht und wurde mit dem Reinigungsprozeß zum Teil entfernt.
Die Untersuchungen an den Vollwarmeschutzsystemen und der Hartfaserplatte, geschützt mit AGSB IV, pigmentiert, sind in der Tabelle 7 zusammengefaßt. Hier zeigte ebenfalls die Handreinigung mit Dekontaminol schon ein gutes Reinigungsergebnis, auch an den stark strukturierten Oberflachenbereichen Es mußte nur punktuell mit einem Kaltwasserdruckstrahl nachgereinigt werden. Die Oberflächen zeigten nach dem Reinigungsprozeß visuell (Farbton und Glanz) keine Veränderungen. Eine Vergleichsplatte, die auf dem VWS nur einen weißen Dispersionsanstrich besitzt, verdeutlicht die Wirksamkeit der AGSB IV.

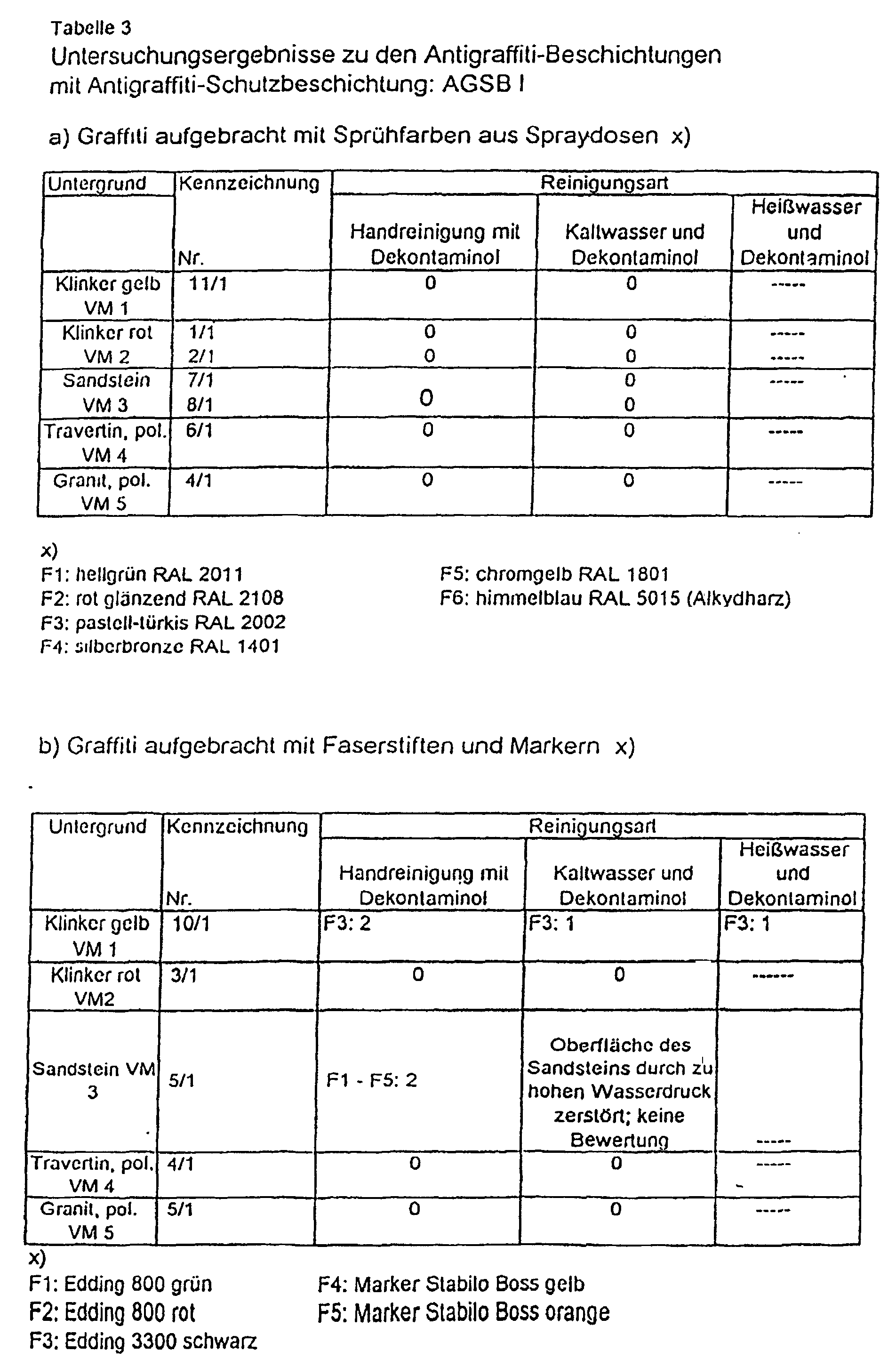

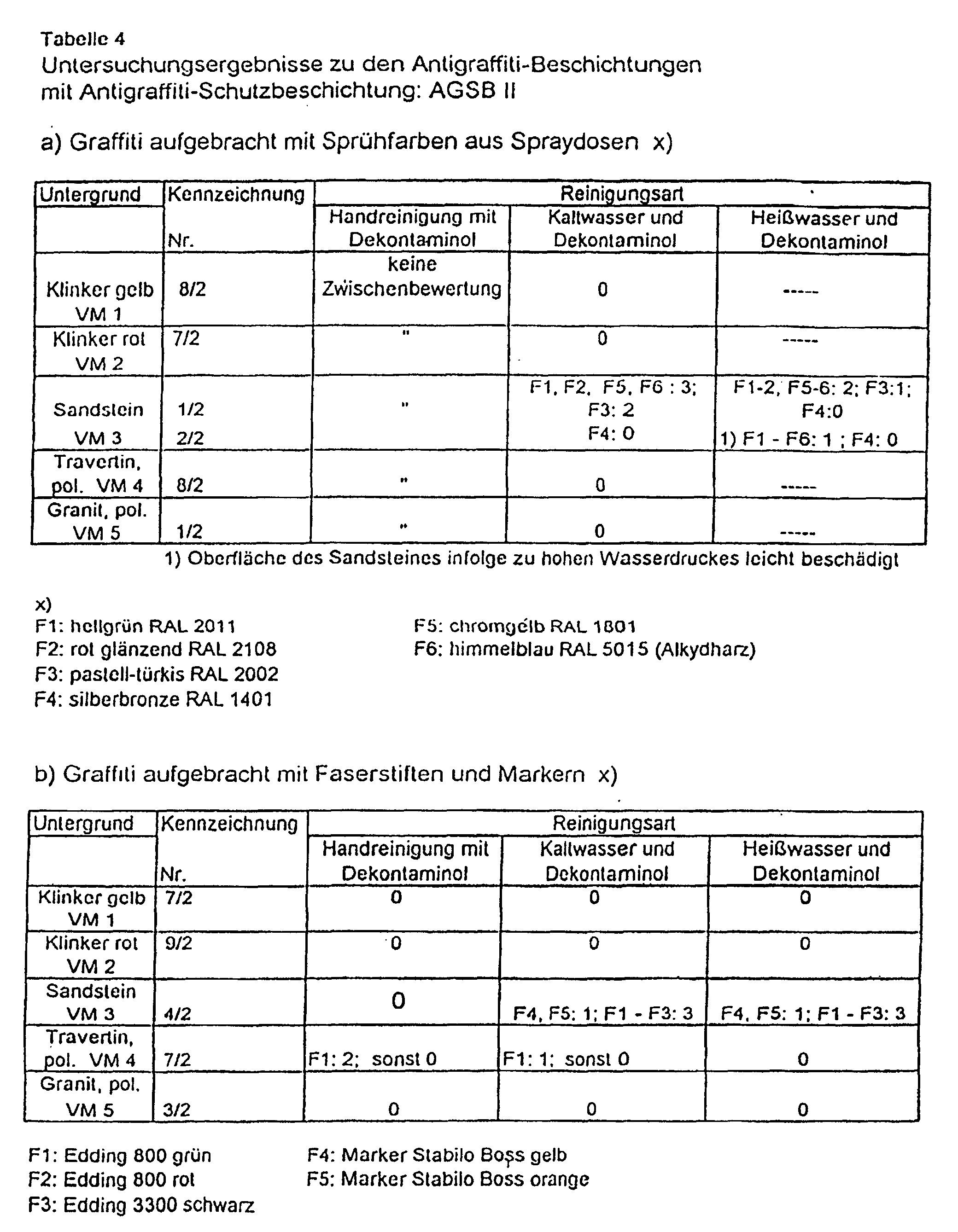

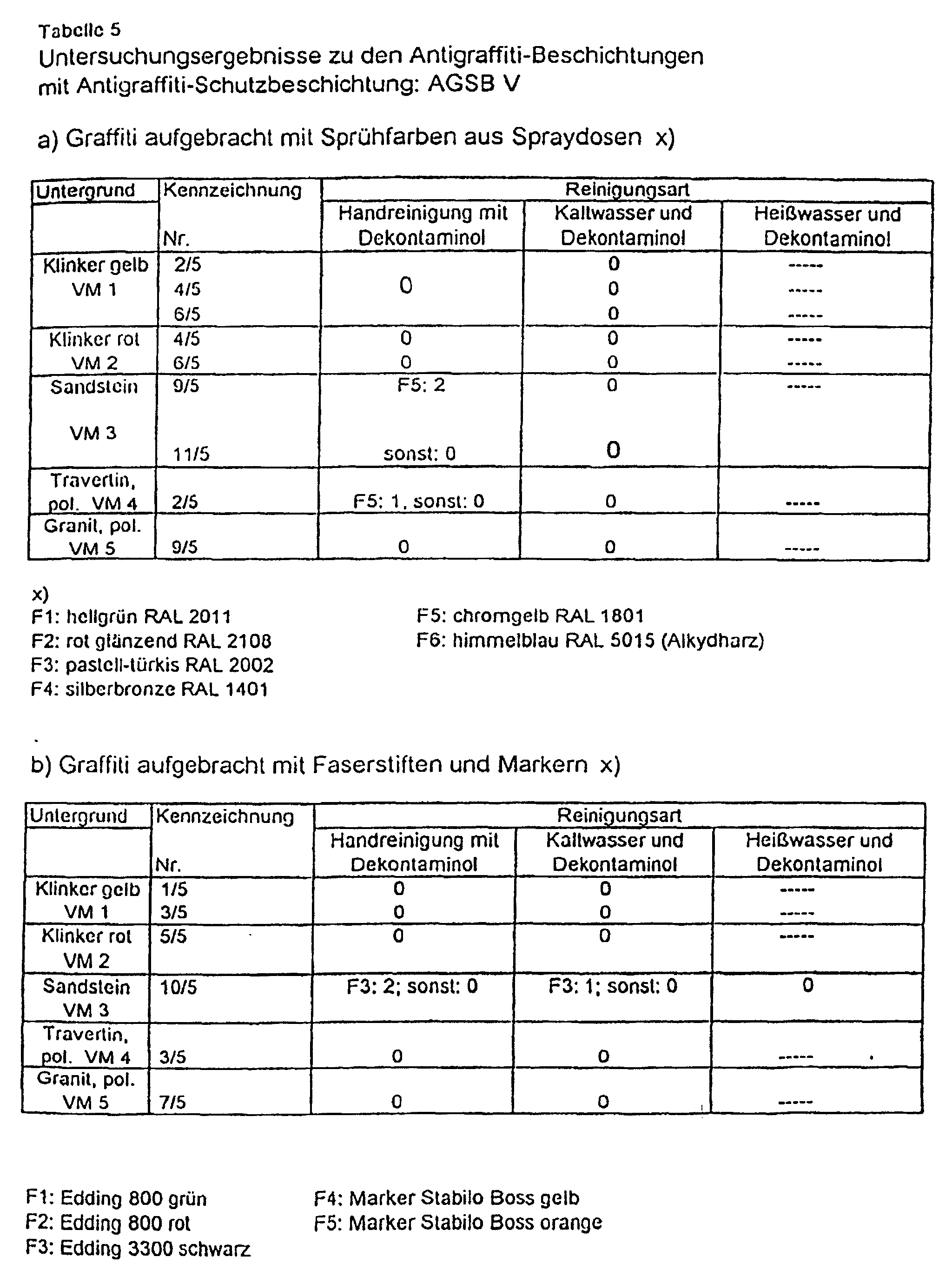

**Tabelle 6**

| Untersuchungsergebnisse zu den Antigraffiti-Beschichtungen mit Antigraffiti-Schutzbeschichtung: AGSB I, II, V | | | | |
|---|---|---|---|---|
| a) Graffiti aufgebracht mit Sprühfarben aus Spraydosen x) b) Graffiti aufgebracht mit Faserstiften und Markern x) | | | | |

| Untergrund | | Reinigungsart | | |
|---|---|---|---|---|
| Betonplatten VM 6 | | Handreinigung mit Dekontaminol | Kaltwasser und Dekontaminol | Heißwasser und Dekontaminol |
| Nr. 1/5 | AGSB V (VM 19) | geringe Farbreste | 0 | 0 |
| Nr.2/1 | AGSB I (VM 17) | geringe Farbreste | 0 | 0 |
| Nr.3/2 | AGSB II (VM 18) | geringe Farbreste | F6: 1; sonst: 0 | 0 |
| x) F1: hellgrün RAL 2011 F2: rot glänzend RAL 2108 F3: pastell-türkis RAL 2002 F4: silberbronze RAL 1401 F5: chromgelb RAL 1001 F6: himmelblau RAL 5015 (Alkydharz) F7: Edding 800 grün F8: Marker Slabilo Boss gelb F9: Edding 3300 schwarz F10: Edding 800 rot F11: Marker Stabilo Boss orange | | | | |

**Tabelle 7**

| Untersuchungsergebnisse zu den Antigraffiti-Beschichtungen mit Antigraffiti-Schutzbeschichtung: AGSB IV, pigmentiert | | | | |
|---|---|---|---|---|
| a) Graffiti aufgebracht mit Sprühfarben aus Spraydosen x) b) Graffiti aufgebracht mit Faserstiften und Markern x) | | | | |

| Untergrund | Bemerkung | Reinigungsart | | |
|---|---|---|---|---|
| | | Handreinigung mit Dekontaminol | Kaltwasser und Dekontaminol | Heißwasser und Dekontaminol |
| Hartfaserplatte Nr.1,braun | VM 7 | F9: 2;F4: 2 | 0 | 0 |
| VWS-Platte Nr.2, grün | VM 8 | 0 | 0 | 0 |
| VWS-Platte Nr.3,weiß | Kontrollplatte ohne AGSB IV VM14 | nicht bewertet | F1-2, F5, F6, F8-9: 3 F3. F7, F10: 2: F4:4 | F1-2. F5, F6, F8: 3; F9 F3. F7: 2: F10: 0: F4:4 |
| VWS-Platte Nr.4,braun | VM 9 | 0 | 0 | 0 |
| VWS-Platte Nr.5,grün | VM 10 | 0 | 0 | 0 |
| VWS-Platte Nr.6.braun | VM 11 | 0 | 0 | 0 |
| VWS-Platte Nr.7,grün | VM 12 | 0 | 0 | 0 |
| VWS-Platte Nr.8,ocker | VM 13 | 0 | 0 | 0 |
| x) F1: hellgrün RAL 2011 F2: rot glänzend RAL 2108 F3: pastell-turkis RAL 2002 F4: silberbronze RAL 1401 F5: Chromgelb RAL 1801 F6: Edding 800 grün F7: Marker Stabilo Boss gelb F8: Edding 3300 schwarz F9: Edding 800 rot F10: Marker Stabilo Boss orange | | | | |

### 3. Zusammenfassung

In einem Modellversuch wurde die Wirksamkeit der Produkte AGSB I, AGSB II, AGSB IV, pigmeritiert, und AGSB V als Schutzanstrich auf den Oberflächen von Klinkern, Sandstein-, Granit-, Travertin-, Betonplatten und Vollwärmeschutzsystemen mit unterschiedlichen Putzarten (nur AGSB IV) gegenüber Graffitimalerei sowie die des Reinigungsmittels Dekontaminol untersucht.

Bei den Produkten AGSB I, AGSB II und AGSB V wurde auf den mineralischen Untergründen in Verbindung mit Dekontaminol eine gute Schutz- und Reinigungswirkung festgestellt. Die Schutzschichten bzw. Imprägnierungen aus diesen Produkten waren nach dem Reinigungsprozeß noch in unterschiedlicher
Menge vorhanden, wie sich visuell zeigte und quantitativ durch TG-Untersuchungen an AGSB I vor und nach dem Reinigungsprozeß nachgewiesen wurde.

Das Produkt AGSB IV, pigmentiert, zeigt auf den Vollwärmeschutzsystemen mit unterschiedlichen Putzarten und auf der Hartfaserplatte in Verbindung mit Dekontaminol sehr gute Schutz- und Reinigungswirkung. An den beschichteten Oberflächen kann nach dem Reinigungsprozeß visuell - in bezug auf Farbton und Glanz - keine Veränderung festgestellt werden.

In den meisten Fallen führte schon die Handreinigung mit Dekontaminol bei allen geprüften Mustern zu einem guten Ergebnis, so daß auf weitere Reinigungsprozesse wie Kaltwasser- bzw. Heißwasserhochdruckreinigung verzichtet werden konnte.

## Patentansprüche

1. Beschichtungsmittel zum Aufbringen eines Schutzüberzugs bzw. einer Imprägnierung sowohl auf glatte als auch auf poröse und saugende Untergründe aus der Gruppe Mauerwerk, Natur- und Kunststein, Putz, Beton, gestrichene Fassaden und Holz, um diese gegen Witterungseinflüsse und mechanische Beanspruchung sowie gegen Einwirkung von Chemikalien zu schützen, auf der Basis von natürlichen und/oder synthetischen Wachsen sowie gegebenenfalls Polymeren und üblichen Zusätzen, dispergiert in einer flüssigen Trägerkomponente, **dadurch gekennzeichnet, daß** es die folgenden Komponenten, jeweils bezogen auf das Gesamtgewicht des Beschichtungsmittels, umfaßt:
a) 10 bis 50 Gew.-% einer Wirkstoff-Komponente, bestehend aus einem oder mehreren natürlichen und/oder synthetischen Wachsen mit einem Schmelzpunkt (Fp.) von 50 bis 90°C und einem Tropfpunkt zwischen 80 und 110°C, einer Säurezahl von 2 bis 20 mg KOH/g und einer Verseifungszahl von 2 bis 25 mg KOH/g, im Gemisch mit einem harten oder plastischen Mikrowachs und Tafelparaffin (Kp = 52 bis 54°C) und einem oder mehreren Polymeren, ausgewählt aus der Gruppe Poly(meth)acrylsäure, Poly(meth)acrylat, gegebenenfalls modifiziertes Polysiloxan, gegebenenfalls modifiziertes Polyurethan oder Vorläufer davon, Siloxanharz, Acrylharz und Polysiloxan-Copolymer, sowie gegebenenfalls pyrogenem Siliciumdioxid,
b) 50 bis 90 Gew.-% einer flüssigen Trägerkomponente, bestehend aus Wasser und/oder einem organischen Lösungsmittel, ausgewählt aus der Gruppe der aliphatischen C₆-C₁₀-Kohlenwasserstoffe, Lackbenzin, Testbenzin, Petrolether, Cyclohexan, Decalin, Xylole, Solvent-Naphtha, Terpene und der Alkyl- und Alkoxyalkylester von C₂-C₈-Fettsäuren, gegebenenfalls im Gemisch mit mindestens einem alkoholischen Co-Lösungsmittel, ausgewählt aus niederen C₂-C₄-Alkoholen, Ethylenglycol, Diethylenglycol, Tetramethylenglycol und höheren Polyalkylenglycolen und Polyolen und ihren Ester- und/oder Ether-Derivaten, und
c) 0,1 bis 35 Gew.-% eines oder mehrerer üblicher Zusätze, ausgewählt aus der Gruppe Netzmittel, Verlaufmittel, Dispergiermittel, Emulgiermittel, Stabilisatoren, Schutzkolloide, Füllstoffe, Riechstoffe, Konservierungsmittel, Hautschutzmittel, Mattierungsmittel, Pigmente, Farbstoffe und/oder Farbtönungsmittel.

2. Beschichtungsmittel nach Anspruch 1, **dadurch gekennzeichnet, daß** das Wachs in der Komponente (a) ausgewählt wird aus der Gruppe der natürlichen Wachse, insbesondere Candelilla-, Camauba-, Japan-, Espartogras-, Kork-, Guaruma-, Reiskeimöl-, Zuckerrohr-, Ouricury- und Montanwachs; der tierischen Wachse, insbesondere Bienenwachs, Schellack-Wachs, Walrat, Lanolin (Woltwachs) und Bürzetfett; der Mineralwachse, insbesondere Ceresin, Ozokerit (Erdwachs), Petrolatum, Paraffin- und Mikro-Wachse; und/oder der synthetischen Wachse (Kunstwachse), hydriertes Jojoba-Öl, gegebenenfalls oxidierte Polyethylenwachse und Polywachse (Polyethylenglycolwachse), Siliconwachse, Esterwachse und synthetische Mikrowachse.

3. Beschichtungsmittel nach Anspruch 1 und/oder 2, **dadurch gekennzeichnet, daß** es sich bei dem Polymer der Komponente (a) um Poly(meth)acrylsäure, Poly(meth)acrylat und/oder gegebenenfalls modifiziertes Polysiloxan handelt, das vorzugsweise frei von Fluor und Chlor, insbesondere frei von Fluor, ist.

4. Beschichtungsmittel nach mindestens einem der Ansprüche 1 bis 3, **dadurch gekennzeichnet, daß** es sich bei der Komponente (b) um Wasser und/oder Butylacetat, Isobutylacetat, Ethylacetat, Methoxypropylacetat, Ethoxyethylacetat und/oder Ethylglycolacetat, gegebenenfalls im Gemisch mit Testbenzin oder Xylolen, handelt.

5. Beschichtungsmittel nach mindestens einem der Ansprüche 1 bis 4, **dadurch gekennzeichnet, daß** die Komponente (c) ein oder mehrere Tenside (Dispergier- und Emulgiermittel), insbesondere anionische Tenside, speziell Seifen und Alkylbenzolsulfonate oder Alkansulfonate, oder kationische Tenside, speziell Benzalkoniumchlorid, Ammoniumsalze, speziell Trimethylcetylammonluchlorid, Aminsalze und Pyridiniumsalze, oder nicht-ionische Tenside, speziell Alkylphenylpolyglycole, enthält.

6. Beschichtungsmittel nach mindestens einem der Ansprüche 1 bis 5, **dadurch gekennzeichnet, daß** die Komponente (c) als Füllstoff Sand (Siliciumdioxid), Kaolin, Ton, Magnesia, Kieselgur, Kalktuff, Bimsstein, Quarz und/oder Gips in Form von fein dispergierten Teilchen mit einem mittleren TeilchenDurchmesser von 0,5 bis 500, vorzugsweise von 1 bis 100 µm, und/oder gefälltes SiO₂ als Mattierungsmittel enthält.

7. Beschichtungsmittet nach mindestens einem der Ansprüche 1 bis 6, **dadurch gekennzeichnet, daß** die Komponente (c) als Pigment ein in dem Trägermedium unlösliches lichtechtes und chemikalienbeständiges anorganisches und/oder organisches Weißpigment, insbesondere Rutil-Titandioxid, Schwarzpigment oder Buntpigment enthält.

8. Beschichtungsmittel nach mindestens einem der Ansprüche 1 bis 7, **dadurch gekennzeichnet, daß** es als Wirkstoff-Komponente (a) mindestens ein natürliches und/oder synthetisches Wachs im Gemisch mit einem harten oder plastischen Mikrowachs und Tafelparaffin (Kp = 52 bis 54°C), dispergiert in Testbenzin, einem Gemisch aus paraffinischen, naphthenischen und aromatischen Kohlenwasserstoffen im C₉-C₁₂-Bereich (Kp. =130 bis 220°C) als flüssiger Trägerkomponente (b), enthält.

9. Beschichtungsmittel nach mindestens einem der Ansprüche 1 bis 7, **dadurch gekennzeichnet, daß** es als Wirkstoff-Komponente (a) mindestens ein natürliches und/oder synthetisches Wachs im Gemisch mit einem harten oder plastischen Mikrowachs und Tafelparaffin (Kp = 52 bis 54°C) sowie im Gemisch mit einem Siloxanharz und/oder Acrylharz, dispergiert in Testbenzin, einem Gemisch aus paraffinischen, naphthenischen und aromatischen Kohlenwasserstoffen im C₉-C₁₂-Bereich (Kp. = 130 bis 220°C) als flüssiger Trägerkomponente (b), enthält.

10. Beschichtungsmittel nach mindestens einem der Ansprüche 1 bis 7, **dadurch gekennzeichnet, daß** es als Wirkstoff-Komponente (a) mindestens ein natürliches und/oder synthetisches Wachs im Gemisch mit einem harten oder plastischen Mikrowachs und Tafelparaffin (Kp = 52 bis 54°C), vorzugsweise mindestens ein Esterwachs (Fp. = 60 bis 90°C) und/oder ein Ethylen-Copolymer-Wachs oder ein Styrol-Acrylat-Wachs, emulgiert in Wasser als flüssiger Trägerkomponente (b) unter Bildung einer nicht-ionogenen Emulsion, enthält.

11. Beschichtungsmittel nach mindestens einem der Ansprüche 1 bis 10, **dadurch gekennzeichnet, daß** es sich dabei um eine farblose Einkomponenten-Flüssigkeit auf Basis natürlicher und/oder synthetischer Wachse, suspendiert in Testbenzin als flüssiger Trägerkomponente (b), für Fassaden aus Naturstein, Kunststein oder Beton handelt.

12. Beschichtungsmittel nach mindestens einem der Ansprüche 1 bis 10, **dadurch gekennzeichnet, daß** es sich dabei um eine farblose Einkomponenten-Flüssigkeit auf Siloxan-Acrylharz-Naturwachs-Basis, emulgiert in Testbenzin als flüssiger Trägerkomponente (b), für nicht-begangene oder befahrene mineralische, silicathaltige Untergründe im Wohn-, Verwaltungs- und Ingenieurbau wie Beton, anorganische Putze, Klinker, Natur- und Betonwerksteine, handelt.

13. Beschichtungsmittel nach mindestens einem der Ansprüche 1 bis 10, **dadurch gekennzeichnet, daß** es sich dabei um eine weißliche wäßrige Einkomponenten-Emulsion auf Basis von Netzmitteln, natürlichen und/oder synthetischen Wachsen, Polymeren und Stabilisatoren in Wasser als flüssiger Trägerkomponente (b) für den Auftrag auf Fassaden aus Natur- und Kunststein oder Beton handelt.

14. Verfahren zur Herstellung des Beschichtungsmittels nach mindestens einem der Ansprüche 1 bis 13, **dadurch gekennzeichnet, daß** man die Wirkstoffkomponente (a) mit der flüssigen Trägerkomponente (b) im Gewichtsverhältnis (40 bis 60): (60 bis 40), vorzugsweise 50: 50, mischt und danach das Ganze mit der flüssigen Trägerkomponente (b) verdünnt zur Einstellung der gewünschten Verarbeitungskonsistenz, die von dem jeweils angewendeten Verarbeitungsverfahren abhängt.

15. Verfahren nach Anspruch 14, **dadurch gekennzeichnet, daß** man die eingesetzten natürlichen und/oder synthetischen Wachse in der gewünschten Konzentration aufschmilzt, die Schmelze auf 100 bis 120°C erwärmt, Testbenzin (Kp. = 130 bis 220°C) oder Wasser, das auf eine Temperatur von etwa 40°C vorerwärmt worden ist, unter Rühren langsam in die Wachsschmelze einlaufen läßt und anschließend unter Rühren die übrigen Bestandteile der Wirkstoffkomponente (a) zugibt und die Lösung bzw. Dispersion auf Zimmertemperatur abkühlt, wobei der Wachsanteil in einem Drittel des Lösungs- bzw. Dispergiermittels bei 100 bis 120°C gelöst und der Rest des Lösungs- bzw. Dispergiermittels und die übrigen Bestandteile der Wirkstoffkomponente (a) kalt eingerührt und anschließend unter gleichzeitiger Kühlung mindestens 1 h lang intensiv gerührt werden unter Bildung einer besonders feinen Dispersität mit einer hervorragenden Dispersions-Stabilität, die vor dem jeweiligen Ansatz über Nacht stehen gelassen und vor dem Abfüllen noch einmal kräftig durchgerührt wird.

16. Verwendung des Beschichtungsmittels nach mindestens einem der Ansprüche 1 bis 13 zum Aufbringen eines Schutzüberzugs bzw. einer Imprägnierung auf harte Oberflächen, insbesondere lackierte Stein-, Keramik-, Glas-, Metall- und Holz-Oberflächen, um sie gegen Witterungseinflüsse und mechanische Beanspruchung sowie gegen Einwirkung von Chemikalien zu schützen und um die Entfernung von darauf aufgebrachten unerwünschten Verschmutzungen und Schmierereien zu erleichtern, ohne den Schutzüberzug bzw. die lmpgägnierung in seiner (ihrer) Funktion zu beeinträchtigen.

17. Verwendung des Beschichtungsmittels nach Anspruch 11, **dadurch gekennzeichnet, daß** es auf Fassaden aus Naturstein, Kunststein oder Beton in einer Auftragsmenge von 100 bis 300 g/m², vorzugsweise von 150 bis 250 g/m², in einer oder mehreren Schichten aufgetragen wird.

18. Verwendung des Beschichtungsmittels nach Anspruch 12, **dadurch gekennzeichnet, daß** es auf nicht-begangene oder befahrene mineralische, silicathaltige Untergründe im Wohn-, Verwaltungs- und Ingenieurbau in einer Auftragsmenge von 100 bis 500 ml/m², vorzugsweise von 250 bis 350 ml/m², in einer oder mehreren Schichten auf den Untergrund aufgetragen wird.

19. Verwendung des Beschichtungsmittels nach Anspruch 13, **dadurch gekennzeichnet, daß** es auf Fassaden aus Natur- und Kunststein oder Beton in einer Auftragsmenge von 100 bis 500 g/m², vorzugsweise 150 bis 350 g/m² in einer oder mehreren Schicht aufgetragen wird.

## Claims

1. A coating composition for applying a protective coat and an impregnation, respectively, both onto smooth and porous and absorbing bases (supports) selected from the group consisting of brick wall, natural and artificial stone, mortar, painted fronts and wood, in order to protect them against the influence of the wheather and mechanical stresses as well as againt the actions of chemicals, based on natural and/or synthetic waxes as well as optional polymers and usual additives, dispersed in a liquid vehicle component, **characterized in that** it comprises the following components each in an amount based on the total weight of the coating composition:
a) from 10 to 50 wt.% of an active substance component consisting of one or more natural and/or synthetic waxes having a melting point (Fp.) of from 50 to 90 °C and a dripping point of from 80 to 110 °C, an acid value of from 2 to 20 mg KOH/g and a saponification number of from 2 to 25 mg KOH/g in admixture with a hard or plastic microwax and plate paraffin (Kp. = 52 - 54 °C) and one or more polymers selected from the group consisting of poly(meth)acrylic acid, poly(meth)acrylate, optionally modified polysiloxane, optionally modified polyurethane or precursors thereof, siloxane resin, acrylic resin and polysiloxane copolymer as well as optionally pyrogenic silica,
b) from 50 to 90 wt.% of a liquid vehicle component, consisting of water and/or an organic solvent, selected from the group consisting of aliphatic C₆-C₁₀-hydrocarbons, white spirit, mineral spirits, petroleum ether, cyclohexane, decaline, xylenes, solvent naphtha, terpenes and the alkyl and alkoxyalkyl esters of C₂-C₆-fatty acids, optionally in admixture with at least one alcoholic co-solvent, selected from the group consisting of lower C₂-C₄-alcohols, ethylene glycol, diethylene glycol, tetramethylene glycol and higher polyalkylene glycols and polyols and ester and/or ether derivatives thereof, and
c) from 0.1 to 35 wt.% of one or more usual additives, selected from the group consisting of wetting agents, levelling agents, dispersants, emulsifiers, stabilizers, protection colloids, fillers, perfumes, preservatives, skin protectants, matting agents, pigments, dyes and/or tinting agents.

2. The coating composition according to claim 1, **characterized in that** the wax in component (a) is selected from the group consisting bf natural waxes, in particular candelilla, camauba, japan, esparto grass, cork, guaruma, rice germ oil, sugar cane, ouricury and montan waxes; animal waxes, in particular beeswax, shellac wax, whale oil, lanoline (wool wax) and rump oil; mineral waxes, in particular ceresine, ococerite (earth wax), petrolatum, paraffin and microwaxes; and/or synthetic waxes (artificial waxes), hydrogenated jojoba oil, optionally oxidized polyethylene waxes and polywaxes (polyethylene glycol waxes), silicone waxes, ester waxes and synthetic microwaxes.

3. The coating composition according to claim 1 and/or claim 2, **characterized in that** the polymer of component (a) is poly(meth)acrylic acid, poly(meth)-acrylate and/or optionally modified polysiloxane and being preferably free of fluorine and chlorine, in particular free of fluorine.

4. The coating composition according to at least one of claims 1 to 3, **characterized in that** component (b) is water and/or butyl acetate, isobutyl acetate, ethyl acetate, methoxypropyl acetate, ethoxyethyl acetate and/or ethylglycol acetate, optionally in admixture with mineral spirits or xylenes.

5. The coating composition according to at least one of claims 1 to 4, **characterized in that** component (c) contains one or more tensides (dispersants and emulsifiers), in particular anionic tensides, especially soaps and alkylbenzene sulfonates or alkane sulfonates, or cationic tensides, especially benzalkonium chloride, ammonium salts, especially trimethylcetylammonium chloride, amine salts and pyridinium salts, or non-ionic tensides, especially alkylphenyl polyglycols.

6. The coating composition according to at least one of claims 1 to 5, **characterized in that** component (c) contains as filler sand (silica), kaoline, clay, magnesia, diatomaceous earth, tufa (limestone), pumice, quartz and/or plaster in the form of finely dispersed particles having an average particle diameter of from 0.5 to 500, preferably of from 1 to 100 µm and/or precipitated SiO₂ as matting agent.

7. The coating composition according to at least one of claims 1 to 6, **characterized in that** component (c) contains as pigment a photoresistant and chemical resistant inorganic and/or organic white pigment, in particular rutile-titania, black pigment or color pigment the pigment being insoluble in the vehicle medium.

8. The coating composition according to at least one of claims 1 to 7, **characterized in that** it contains as active substance component (a) at least one natural and/or synthetic wax in admixture with a hard or plastic mikrowax and plate paraffin (Kp. = 52 - 54 °C), dispersed in mineral spirits, a mixture of paraffinic, naphthenic and aromatic hydrocarbons in the C₉-C₁₂-range (Kp. = 130 - 220 °C) as a liquid vehicle component (b).

9. The coating composition according to at least one of claims 1 to 7, **characterized in that** it contains as active substance component (a) at least one natural and/or synthetic wax in admixture with a hard or plastic microwax and plate paraffin (Kp. = 52 - 54 °C) as well as in admixture with a siloxane resin and/or acrylic resin, dispersed in mineral spirits, a mixture of paraffinic, naphthenic and aromatic hydrocarbons in the C₉-C₁₂-range (Kp. = 130 - 220 °C) as a liquid vehicle component (b).

10. The coating composition according to at least one of claims 1 to 7, **characterized in that** it contains as active substance component (a) at least one natural and/or synthetic wax in admixture with a hard or plastic microwax and plate paraffin (Kp. = 52 - 54°C), preferably at least one ester wax (Fp. = 60 - 90 °C) and/or an ethylene copolymer wax or a styrene-acrylate wax, emulsified in water as a liquid vehicle component (b) to form a non-ionogic emulsion.

11. The coating composition according to at least one of claims 1 to 10, **characterized in that** it is a colorless one-component liquid based on natural and/or synthetic waxes, suspended in mineral spirits as a liquid vehicle component (b) for fronts made of natural stone, artificial stone or concrete.

12. The coating composition according to at least one of claims 1 to 10, **characterized in that** it is a colorless one-component liquid based on siloxane-acrylic acid-natural wax, emulsified in mineral spirits as a liquid vehicle component (b) for floors in buildings, administration buildings and engineering buildings made of concrete, inorganic mortars, klinker bricks, natural and concrete stones non-passed by pedestrians and vehicles.

13. The coating composition according to at least one of claims 1 to 10, **characterized in that** it is an off-white aqueous one-component emulsion based on wetting agents, natural and/or synthetic waxes, polymers and stabilizers in water as a liquid vehicle component (b) for the application onto fronts made of natural or artificial stone or concrete.

14. A process for preparing the coating composition according to at least one of claims 1 to 13, **characterized in that** the active substance component (a) and the liquid vehicle component (b) are mixed in a weight ratio of (40 - 60): (60 - 40), preferably 50 : 50, and then the mixture is diluted with the liquid vehicle component (b) for adjusting the desired processing consistence depending on the used processing procedure.

15. The process according to claim 14, **characterized in that** the used natural and/or synthetic waxes are melted in the desired concentration, the melt is heated to a temperature of from 100 to 120 °C, mineral spirits (Kp. = 130 - 220 °C) or water, preheated to a temperature of from about 40 °C, is added slowly with agitating into the wax melt and then the remaining components of the active substance component (a) are added and the solution and dispersion, respectively, is cooled down to room temperature, whereby the wax portion is dissolved in a third of the solvent and dispersant, respectively, at 100 to 120 °C, and the rest of the solvent and dispersant, respectively, and the remaining components of the active substance component (a) are added without heating by stirring and then are intensively agitated for at least one hour with simultaneous cooling to form a particularly fine dispersity having a excellent dispersion stability which is allowed to stand overnight before making the final product which is vigorously agitated again before dispensing it into containers.

16. Use of the coating composition according to at least one of claims 1 to 13 for applying a protecting coat and an impregnation, respectively, onto hard surfaces, in particular painted surfaces of stone, ceramic, glass, metal and wood in order to protect them against the influence of the whether and mechanical stresses as well as against the action of chemicals and in order to facilitate the removal of undesired contaminations and graffiti contained thereon without deteriorating the protecting coat and the impregnation, respectively, in its function.

17. The use of the coating composition according to claim 11, **characterized in that** it is applied onto fronts made of natural stone, artificial stone or concrete in an amount of from 100 to 300 g/m², preferably of from 150 to 250 g/m², in the form of one or more layers.

18. The use of the coating composition according to claim 12, **characterized in that** the coating composition is applied onto mineral, silicate-containing floors in buildings, administration buildings and engineering buildings non-passed by pedestrians and vehicles in an amount of from 100 to 500 ml/m², preferably of from 250 to 350 ml/m², in the form of one or more layers.

19. The use of the coating composition according to claim 13, **characterized in that** the coating composition is applied onto fronts made of natural or artificial stone or of concrete in an amount of from 100 to 500 g/m², preferably of from 150 to 350 g/m², in the form of one or more layers.

## Revendications

1. Moyen de revêtement pour appliquer une couche protectrice respectivement une imprégnation aussi bien sur des fonds lisses que sur des fonds poreux et absorbants du groupe constitué par les ouvrages de maçonnerie, les pierres naturelles et artificielles, l'enduit, le béton, les façades peintes et le bois, pour protéger ceux-ci contre des intempéries et des contraintes mécaniques ainsi que contre l'action de substances chimiques, à base de cires naturelles et/ou synthétiques ainsi que, le cas échéant, de polymères et d'additifs usuels, dispersés dans un composant porteur liquide, **caractérisé en ce qu'**il comporte les composants suivants, respectivement par rapport au poids total du moyen de revêtement:
a) 10 à 50% en poids d'un composant de matière active, constitué d'une ou de plusieurs cires naturelles et/ou synthétiques avec un point de fusion (Fp.) de 50 à 90°C et une température de goutte entre 80 et 110°C, un indice d'acidité de 2 à 20 mg KOH/g et un indice de saponification de 2 à 25 mg KOH/g, en mélange avec une cire microcristalline dure ou plastique et une paraffine complètement raffinée (Kp = 52 à 54°C) et un ou plusieurs polymères, choisis du groupe constitué par l'acide poly(méth)acrylique, le poly(méth)acrylate, éventuellement le polysiloxane modifié, éventuellement le polyuréthane modifié ou des précurseurs de ce dernier, la résine de siloxane, la résine acrylique et le copolymère de polysiloxane, ainsi qu'éventuellement le dioxyde de silicium pyrogène,
b) 50 à 90% en poids d'un composant porteur liquide, composé d'eau et/ou d'un solvant organique, choisi du groupe constitué par les C₆-C₁₀-hydrocarbures aliphatiques, l'essence minérale, le solvant blanc, l'éther de pétrole, le cyclohexane, le décaline, les xylènes, le white spirit; les terpènes et les esters alkyle et alkoxyalkyle de C₂-C₆-acides gras, éventuellement en mélange avec au moins un co-solvant alcoolique, choisi parmi les C₂-C₄-alcools d'ordre inférieur, l'éthylène glycol, le diéthylène glycol, le tétraméthylène glycol et les polyalkylène glycols d'ordre supérieur et les polyols et leurs dérivés ester et/ou éther, et
c) 0,1 à 35% en poids d'un ou de plusieurs additifs usuels, choisis du groupe constitué par les agents mouillants, les agents nivelants, les agents dispersants, les agents émulsionnants, les stabilisateurs, les colloïdes de protection, les matières de remplissage, les matières odorantes, les agents conservateurs, les moyens protecteurs de la peau, les moyens matissants, les pigments, les matières colorantes et/ou de nuançage de couleur.

2. Moyen de revêtement selon la revendication 1, **caractérisé en ce que** la cire dans le composant (a) est choisie du groupe constitué par les cires naturelles, en particulier les cires Candellila, Carnauba, la cire du Japon, la ciré alfa, la cire de liège, la cire de guaruma, la cire d'huile de riz, la cire de canne à sucre, la cire Ouricury et la cire montanique; les cires animales, en particulier la cire d'abeille, la cire de shellac, la cire de cétine, la lanoline (cire de laine) et la graisse de croupion; les cires minérales, en particulier la cérésine, l'Ozokérite (cire de terre), le pétrolatum, les cires de paraffine et les cires microcristallines; et/ou les cires synthétiques (cires artificielles), l'huile de jojoba hydrogénée, éventuellement les cires de polyéthylène oxydées et les poly-cires (cires de polyéthylène-glycol), les cires de silicone, les cires d'ester et les cires microcristallines synthétiques.

3. Moyen de revêtement selon la revendication 1 et/ou 2, **caractérisé en ce que** le polymère du composant (a) est l'acide poly(méth)acrylique, le poly(méth)acrylate et/ou éventuellement le polysiloxane modifié, qui est de préférence exempt de fluor et de chlore, en particulier exempt de fluor.

4. Moyen de revêtement selon au moins l'une des revendications 1 à 3, **caractérisé en ce que** le composant (b) est de l'eau et/ou l'acétate de butyle, l'acétate d'isobutyle, l'acétate d'éthyle, l'acétate de méthoxypropyl, l'acétate d'éthoxyéthyl et/ou l'acétate d'éthyle glycol, éventuellement en mélange avec du white spirit ou du xylènes.

5. Moyen de revêtement selon au moins l'une des revendications 1 à 4, **caractérisé en ce que** le composant (c) comporte un ou plusieurs tensio-actifs (moyens de dispersion et d'émulsionnement), en particulier des tensio-actifs anioniques, spécialement des savons et des sulfonates de benzène d'alkyl ou des sulfonates d'alcane, ou des tensio-actifs cationiques, spécialement du chlorure de benzalkonium, des sels d'ammonium, spécialement du chlorure de triméthylcétyl ammonium, des sels d'amines et des sels de pyridine, ou des tensio-actifs non-ioniques, spécialement des polyglycols d'alkyl phényle.

6. Moyen de revêtement selon au moins l'une des revendications 1 à 5, **caractérisé en ce que** le composant (c) comporte en tant que matière de remplissage du sable (dioxyde de silicium), du kaolin, de l'argile, de la magnésie, de la diatomite, du tuf calcaire, de la pierre ponce, du quartz et/ou du plâtre sous forme de particules finement dispersées avec un diamètre moyen de particule de 0,5 à 500, de préférence de 1 à 100 µm, et/ou du SiO₂ précipité en tant que moyen matissant.

7. Moyen de revêtement selon au moins l'une des revendications 1 à 6, **caractérisé en ce que** le composant (c) contient en tant que pigment un pigment blanc anorganique et/ou organique insoluble dans le milieu porteur, solide à la lumière et résistant aux matières chimiques, en particulier du rutil-dioxide de titane, du pigment noir ou du pigment coloré.

8. Moyen de revêtement selon au moins l'une des revendications 1 à 7, **caractérisé en ce qu'**il contient en tant que composant de matière active (a) au moins une cire naturelle et/ou synthétique en mélange avec une cire microcristalline dure ou plastique et une paraffine complètement raffinée (Kp = 52 à 54°C), dispersée dans du white spirit, un mélange d'hydrocarbures paraffiniques, naphthéniques et aromatiques dans la gamme C₉-C₁₂ (Kp. = 130 à 220°C) en tant que composant porteur liquide (b).

9. Moyen de revêtement selon au moins l'une des revendications 1 à 7, **caractérisé en ce qu'**il contient en tant que composant de matière active (a) au moins une cire naturelle et/ou synthétique en mélange avec une cire microcristalline dure ou plastique et une paraffine complètement raffinée (Kp = 52 à 54°C), ainsi qu'en mélange avec une résine de siloxane et/ou une résine acrylique, dispersée dans du white spirit, un mélange d'hydrocarbures paraffiniques, naphthéniques et aromatiques dans la gamme C₉-C₁₂ (Kp. = 130 à 220°C) en tant que composant porteur liquide (b).

10. Moyen de revêtement selon au moins l'une des revendications 1 à 7, **caractérisé en ce qu'**il contient en tant que composant de matière active (a) au moins une cire naturelle et/ou synthétique en mélange avec une cire microcristalline dure ou plastique et une paraffine complètement raffinée (Kp = 52 à 54°C), de préférence au moins une cire d'ester (Fp. = 60 à 90°C) et/ou une cire de copolymère d'éthylène ou une cire d'acrylate de styrène, émulsionnée dans de l'eau en tant que composant porteur liquide (b) pour formation d'une émulsion non-ionogène.

11. Moyen de revêtement selon au moins l'une des revendications 1 à 10, **caractérisé en ce qu'**il s'agit d'un liquide incolore à un composant à base de cires naturelles et/ou synthétiques, suspendues dans du white spirit en tant que composant porteur liquide (b), pour des façades en pierre naturelle, pierre artificielle ou béton.

12. Moyen de revêtement selon au moins l'une des revendications 1 à 10, **caractérisé en ce qu'**il s'agit d'un liquide incolore à un composant à base de siloxane-résine acrylique-cire naturelle, émulsionné dans du white spirit en tant que composant porteur liquide (b), pour des fonds minéraux contenant du silicate et non praticables à pied ou en voiture, dans le domaine de constructions résidentielles, administratives et d'ingénierie, comme du béton, des enduits anorganiques, des briques, des pierres de taille naturelles et en béton.

13. Moyen de revêtement selon au moins l'une des revendications 1 à 10, **caractérisé en ce qu'**il s'agit d'une émulsion blanchâtre aqueuse à un composant à base d'agents réticulants, de cires naturelles et/ou synthétiques, de polymères et de stabilisants dans l'eau en tant que composant porteur liquide (b) pour l'application sur des façades en pierre naturelle et artificielle ou en béton.

14. Procédé pour la fabrication du moyen de revêtement selon au moins l'une des revendications 1 à 13, **caractérise en ce que** le composant de matière active
(a) est mélangé avec le composant porteur liquide (b) dans un rapport en poids (40 à 60):(60 à 40), de préférence 50:50, et qu'ensuite le tout est dilué avec le composant porteur liquide (b) pour le réglage de la consistance de traitement désirée, qui dépend du procédé de traitement respectif utilisé.

15. Procédé selon la revendication 14, **caractérisé en ce que** les cires naturelles et/ou synthétiques utilisées sont fondues dans la concentration désirée, la masse fondue est chauffée à 100 à 120°C, du white spirit (Kp. = 130 à 220°C) ou de l'eau, qui a été préchauffée à une température d'environ 40°C, est introduit par écoulement lent en remuant dans la masse de cire fondue, et ensuite les autres constituants du composant de matière active (a) sont ajoutés, et la solution respectivement la dispersion est refroidie à température ambiante, la portion de cire étant dissoute dans un tiers du solvant respectivement de l'agent dispersant à 100 à 120°C, et le reste du solvant respectivement de l'agent dispersant et les autres constituants du composant de matière active (a) sont délayés à froid et ensuite remués intensivement pendant au moins 1 heure en les refroidissant simultanément pour la formation d'une dispersion particulièrement fine avec une stabilité de dispersion excellente, qui est fait reposer pendant une nuit et remuée de nouveau fortement avant le soutirage respectif.

16. Utilisation du moyen de revêtement selon au moins l'une des revendications 1 à 13 pour l'application d'une couche protectrice respectivement d'une imprégnation sur des surfaces dures, en particulier des surfaces laquées en pierre, en céramique, en verre, en métal et en bois, pour les protéger contre des intempéries et des contraintes mécaniques ainsi que contre l'action de matières chimiques, et pour faciliter l'élimination d'encrassements et de barbouillages indésirables y appliqués, sans affecter la fonction du revêtement de protection respectivement de l'imprégnation.

17. Utilisation du moyen de revêtement selon la revendication 11, **caractérisée en ce qu'**il est appliqué dans une ou plusieurs couches sur des façades en pierre naturelle, pierre artificielle ou béton dans une quantité d'application de 100 à 300 g/m², de préférence de 150 à 250 g/m².

18. Utilisation du moyen de revêtement selon la revendication 12, **caractérisée en ce qu'**il est appliqué sur des fonds minéraux, contenant un silicate, non praticables à pied ou en voiture, dans le domaine de construction résidentielle, administrative ou d'ingénierie, dans une quantité d'application de 100 à 500 ml/m², de préférence de 250 à 350 ml/m², dans une ou plusieurs couches sur le fond.

19. Utilisation du moyen de revêtement selon la revendication 13, **caractérisée en ce qu'**il est appliqué dans une ou plusieurs couches sur des façades en pierre naturelle et pierre artificielle ou béton dans une quantité d'application de 100 à 500 g/m², de préférence de 150 à 350 g/m².
